# EUROPÄISCHE PATENTSCHRIFT

(11) **EP 4 330 116 B1**
(45) Veröffentlichungstag und Bekanntmachung des Hinweises auf die Patenterteilung: **12.03.2025**
(21) Anmeldenummer: 22722692.5
(22) Anmeldetag: 08.04.2022
(51) Int. Cl.: B62D 53/12, B60D 1/62, B60D 1/36, B60D 1/01

(54) **VERFAHREN UND VORRICHTUNG ZUM ASSISTIERTEN ODER AUTOMATISCHEN ANKOPPELN EINES ANHÄNGERFAHRZEUGES AN EIN ZUGFAHRZEUG SOWIE ZUGFAHRZEUG, ELEKTRONISCHE VERARBEITUNGSEINHEIT UND COMPUTERPROGRAMM**
METHOD AND DEVICE FOR AN ASSISTED OR AUTOMATIC COUPLING OF A TRAILER VEHICLE TO A TOWING VEHICLE, TOWING VEHICLE, ELECTRONIC PROCESSING UNIT, AND COMPUTER PROGRAM
PROCÉDÉ ET DISPOSITIF D'ACCOUPLEMENT ASSISTÉ OU AUTOMATIQUE D'UN VÉHICULE REMORQUÉ À UN VÉHICULE TRACTEUR, VÉHICULE TRACTEUR, UNITÉ DE TRAITEMENT ÉLECTRONIQUE ET PROGRAMME INFORMATIQUE

(30) Priorität: 26.04.2021 DE 102021110564
(43) Veröffentlichungstag der Anmeldung: 06.03.2024
(73) Patentinhaber: ZF CV Systems Global GmbH, 3006 Bern (CH)
(72) Erfinder: BARTH, Christoph, 30419 Hannover (DE); GOERS, Andreas, 30982 Pattensen (DE)
(74) Vertreter: Schäferjohann, Volker
(86) Internationale Anmeldenummer: PCT/EP2022/059347
(87) Internationale Veröffentlichungsnummer: WO 2022/228858

(56) Entgegenhaltungen:
- DE-A1- 102018 122 185
- US-A1- 2014 236 532
- US-A1- 2019 039 425
- US-A1- 2019 329 612

## Beschreibung

Die Erfindung betrifft das technische Gebiet von Nutzfahrzeugen, insbesondere Zugfahrzeuge und Anhängerfahrzeuge. Vielfach werden solche Anhängerfahrzeuge auf Betriebshöfen von Logistikunternehmen und anderen Unternehmen abgestellt. Oft müssen die Anhänger auf dem Betriebshof rangiert werden, zum Beladen, Entladen, Befüllen, Warten, Abstellen, usw. Schließlich werden die Anhängerfahrzeuge von Zugfahrzeugen abgeholt, die sie dann an ihren Bestimmungsort bringen. Es gibt vielfältige Varianten von Anhängerfahrzeugen, darunter einachsige und mehrachsige Anhängerfahrzeuge. Bei den mehrachsigen Anhängerfahrzeugen wird noch unterschieden ob sie mit Deichsel, oder ohne Deichsel ausgestattet sind. Die mehrachsigen Anhängerfahrzeuge, die ohne Deichsel ausgestattet sind, werden als Sattelanhänger- oder Sattelauflieger-Anhängerfahrzeuge oder auch international als Semi-Trailer bezeichnet. Bei ihnen sind die Radachsen nur an einer Rückseite des Anhängerfahrzeuges. An der Vorderseite sind diese Anhängerfahrzeuge mit Stützen oder Ständern ausgestattet, die zum Abstellen des Anhängerfahrzeug ausgefahren oder ausgeklappt und zum Fahren eingefahren oder eingeklappt werden können.

Die nachfolgend beschriebene Erfindung wird vorwiegend für diese Sattelauflieger-Anhängerfahrzeuge beschrieben. Bei ihnen sollte der Ankoppelvorgang besonders vorsichtig stattfinden, damit es nicht zu Beschädigungen am Zugfahrzeug aber insbesondere an dem auf Stützen stehenden Anhängerfahrzeug kommt. Die besondere Problematik besteht darin, dass das Zugfahrzeug mit einem Ankoppelelement ausgestattet ist, das eine Sattelplatte aufweist. Dies Sattelplatte ist leicht erhöht angebracht und drehbar gelagert. An der rückwärtigen Seite ist die Sattelplatte mit einer V-förmigen Öffnung versehen, in die ein sogenannter Königszapfen des Anhängerfahrzeuges eingreifen kann. Beim Ankoppeln muss das Zugfahrzeug so zurückgesetzt werden, dass der Königszapfen in die Öffnung der Sattelplatte gelangt. Die seitlichen Führungen der V-förmigen Öffnung sorgen dafür, dass der Königszapfen zur Zentralstelle der Sattelplatte gelenkt wird. Vor der Zentralstelle sind Rastelemente angebracht, die mit Federkraft gehalten werden. Damit der Königszapfen in die Zentralstelle einrasten kann, müssen die Rastelemente zur Seite gedrückt werden gegen die Federkraft. Damit dies geschehen kann, muss also das Zugfahrzeug beim Rückwärtssetzen entsprechend stark gegen den Königszapfen des Anhängerfahrzeuges drücken, bis dieser an der Zentralstelle einrastet.

Genau dies ist für den Fahrer eine schwierige Aufgabe. Er muss die Längs- und Querkontrolle des Zugfahrzeug gleichzeitig ausführen. Oft ist die Sicht auf den Königszapfen beim Rückwärtssetzen nicht optimal. Weiterhin besteht bei dem Fahrer häufig ein erhöhter Zeitdruck. So kommt es dann vor, dass mit einer zu großen Geschwindigkeit zurückgesetzt wird und das Zugfahrzeug mit einem zu großen Impuls auf den Königszapfen des Anhängerfahrzeuges prallt. Dabei wird ggfs. das Anhängerfahrzeug ein Stück nach hinten versetzt. Dies führt zu einem Verwinden der Stützen des Anhängerfahrzeuges oder sogar zu einem Verschieben des Anhängerfahrzeuges. Dies kann zu Schäden an den Stützen oder dem Chassis des Anhängerfahrzeuges führen. Auch das Ankoppelelement des Zugfahrzeug wird mehr als notwendig belastet und kann dadurch stärker verschleißen.

Wenn der Königszapfen an der Zentralstelle eingerastet ist, halten die zurückgeschnappten Rastelemente den Königszapfen an der Position, so dass das Anhängerfahrzeug während der Fahrt stabil mit dem Zugfahrzeug verbunden bleibt. Die Rastelemente können durch eine Mechanik gelöst werden. Diese wird vom Fahrer betätigt, wenn er das Anhängerfahrzeug abkoppeln möchte.

Das Dokument US2019039425A1 bezieht sich auf Systeme und Verfahren zur automatischen Steuerung der LKW-Bewegung für einen autonomen Dockingbetrieb.

Das Dokument US2019329612A1 betrifft ein Verfahren zur Überwachung der Ankupplung einer Sattelkupplung an einen Königszapfen eines Sattelaufliegers. Dabei werden die Schwingungen beim Ankoppelvorgang gemessen.

Das Dokument DE102018122185A1 betrifft ein Anhängerkupplungshilfesystem und -verfahren. Dabei wird ein Fahrzeugrücksetzweg zum Anhänger berechnet.

Das Dokument DE102014203105A1 betrifft ein System und ein Verfahren zur Schätzung der Länge eines Anhängers basierend auf den von einem am Ende eines Anhängers angebrachten Sender ausgestrahlten Signalen.

Es besteht also ein Problem darin, dass der Ankoppelvorgang bei der manuellen Durchführung seitens der Fahrer häufig nicht optimal verläuft und dadurch der Verschleiß erhöht ist und Schäden entstehen können. Dieses Problem verschärft sich dadurch, dass der Fahrer versucht ist, eher mit einer höheren Geschwindigkeit anzukoppeln als unbedingt notwendig. So kann er Fehlversuche beim Ankoppeln vermeiden und muss nicht einen neuen Ankoppelvorgang starten, zu dem er wieder die notwendige Sichtkontrolle durchführen muss. Dafür müsste er dann erneut aussteigen.

Es besteht also der Bedarf für Verbesserungen beim Ankoppelvorgang, um Schäden zu vermeiden und den Verschleiß zu verringern.

Aufgabe der Erfindung ist es daher, den Ankoppelvorgang so zu verbessern, dass ein häufiges Aufprallen des Zugfahrzeuges mit zu hoher Geschwindigkeit auf das Anhängerfahrzeug vermieden wird.

Diese Aufgabe wird durch ein Verfahren zum assistierten oder automatischen Ankoppeln eines Anhängerfahrzeuges an ein Zugfahrzeug gemäß Anspruch 1, durch eine Vorrichtung zum assistierten oder automatischen Ankoppeln eines Anhängerfahrzeuges an ein Zugfahrzeug gemäß Anspruch 8, ein Zugfahrzeug gemäß Anspruch 15 und eine elektronische Verarbeitungseinheit nach Anspruch 16 gelöst.

Die abhängigen Ansprüche beinhalten vorteilhafte Weiterbildungen und Verbesserungen der Erfindung entsprechend der nachfolgenden Beschreibung dieser Maßnahmen.

In einer Ausprägung betrifft die Erfindung ein Verfahren zum assistierten oder automatischen Ankoppeln eines Anhängerfahrzeuges an ein Zugfahrzeug. Dabei ist das Zugfahrzeug mit einem Ankoppelelement ausgestattet, das eine Führung, z.B. Seitenführung aufweist für ein Ankoppelelement des Zugfahrzeuges. Weiterhin ist das Zugfahrzeug mit einer elektronisch geregelten Betriebsbremse und einem Antrieb ausgestattet ist. Das Verfahren kennzeichnet sich dadurch aus, dass nach Ausrichtung und Annäherung des Zugfahrzeuges bezogen auf das Anhängerfahrzeug ein automatisierter Ankoppelvorgang gestartet wird. Der automatisierte Ankoppelvorgang ist gekennzeichnet durch die Schritte Starten einer Rückwärtsfahrt mit einer bestimmten Geschwindigkeit und einem bestimmten Antriebsmoment, Erfassen der Längs- und Querbeschleunigung des Zugfahrzeuges, bei Auftreten einer Querbeschleunigung in einem ersten Wertebereich mit Auftreten einer Längsbeschleunigung in einem zweiten Wertebereich und anschließendem Auftreten einer Längsbeschleunigung in einem dritten Wertebereich, Stoppen der Rückwärtsfahrt durch Abschalten des Antriebsmomentes und/oder Betätigen der Betriebsbremse. Dieses Verfahren hat den Vorteil, dass das Einrasten des Ankoppelgegenstücks des Anhängerfahrzeugs in das Ankoppelelement des Zugfahrzeuges messtechnisch erfasst wird, und damit eine sofortige Abschaltung des bei der Rückwärtsfahrt wirkenden Antriebsmomentes des Zugfahrzeuges erfolgt und ein Verschieben des Anhängerfahrzeuges durch das weiterwirkende Antriebsmoment des Zugfahrzeuges unterbunden wird. Dadurch wird der Verschleiß verringert und es werden Schäden bei Anhängerfahrzeug und Zugfahrzeug vermieden.

In einer erweiterten Ausführungsform des erfindungsgemäßen Verfahrens wird die Bedingung gefordert, dass der dritte Wertebereich mindestens um einen bestimmten Wert größer als der Absolutwert der zuvor erfassten Querbeschleunigung ist. Dies hat den Vorteil, dass Berührungen zwischen Ankoppelgegenstück des Anhängerfahrzeuges und Ankoppelelement des Zugfahrzeuges ausgeschlossen werden, die nicht zum Einrasten von Ankoppelgegenstück in das Ankoppelelement des Zugfahrzeuges führen.

Besonders vorteilhafte Startbedingungen für den automatisierten Ankoppelvorgang bestehen darin, dass vor dem Starten der Rückwärtsfahrt das Niveau des Ankoppelelementes des Zugfahrzeuges an die Höhe des Anhängerfahrzeuges angepasst wird indem in einem Schritt überprüft wird, ob das Ankoppelelement des Zugfahrzeuges mit dem Chassis des Anhängerfahrzeuges Kontakt hat, und das Ankoppelgegenstück des Anhängerfahrzeuges im Fangbereich des Ankoppelelementes des Zugfahrzeuges positioniert ist oder eine Bestätigung seitens des Fahrers vorliegt, dass Anhängerfahrzeug und Ankoppelelement so ausgerichtet sind, dass das Ankoppelgegenstück des Anhängerfahrzeuges in das Ankoppelelement des Zugfahrzeuges eingreifen kann. Bei diesen Startbedingungen braucht keine Querführung des Zugfahrzeuges während des Ankoppelvorganges erfolgen, weil die Seitenführung des Ankoppelelementes quasi für die Querführung sorgt.

Eine vorteilhafte Ausgestaltung des Verfahrens zum assistierten oder automatischen Ankoppeln eines Anhängerfahrzeuges an ein Zugfahrzeug besteht darin, dass zum Starten der Rückwärtsfahrt ein bestimmtes Antriebsmoment des Antriebes des Zugfahrzeuges eingestellt wird und die Geschwindigkeit des Zugfahrzeuges so geregelt wird, dass eine vorgegebene Geschwindigkeit nicht überschritten wird. Es wird dadurch das Antriebsmoment und die Geschwindigkeit des Zugfahrzeuges begrenzt. Der auftretende Impuls bei dem gewünschten Aufprall der beiden Ankoppelelemente wird dadurch wirksam begrenzt. Dadurch werden ebenfalls Schäden vermieden und der Verschleiß verringert.

Das Verfahren kann noch dadurch verbessert werden, dass während der Rückwärtsfahrt des Zugfahrzeuges ab der Messung der Querbeschleunigung in einem ersten Wertebereich mit gleichzeitiger Messung der Längsbeschleunigung in einem zweiten Wertebereich die Anzahl der Inkremente eines Inkrementgebers erfasst wird. Solche Inkrementgeber werden vor allem im Bereich der Erfassung von Drehbewegungen eingesetzt. Dort werden sie auch als Inkrementrad bezeichnet. Sie arbeiten mit einem Sensor zusammen, der ein Inkrementsignal erzeugt, wann immer ein Inkrement des Inkrementgebers sich an dem Sensor vorbeibewegt. Diese Inkrementsignale können übertragen werden und in einer Verarbeitungseinheit gezählt werden.

Die Inkrementgeber sind typischerweise so gestaltet, dass die Inkremente äquidistant angeordnet sind, so dass mit Auftreten eines Inkrementsignales jeweils die gleiche Drehbewegung mit einem definierten Drehwinkel einhergeht. Im Fahrzeugbereich sind Inkrementgeber z.B. an den Rädern angebracht zusammen mit Raddrehzahlsensoren als Inkrementgebersensoren. Die erzeugten Signale werden von verschiedenen Systemen ausgewertet, wie ABS, entsprechend Antiblockiersystem und ASR entsprechend Antriebschlupfregelung.

Weiterhin ist es von Vorteil, wenn der Ankoppelvorgang sofort abgebrochen wird, wenn die während der Rückwärtsfahrt erfasste Anzahl der Inkremente einen bestimmten Wert überschreitet bis zu dem keine Längsbeschleunigung mit einem Wert in dem dritten Wertebereich gemessen wurde. Dies ist gleichbedeutend mit einer inkorrekten Einstellung der Höhenanpassung, weil dann der Königszapfen bereits den eigentlichen Aufprallpunkt passiert hat.

Eine weitere vorteilhafte Maßnahme des Verfahrens besteht darin, dass nach Stoppen der Rückwärtsfahrt zum Verifizieren der erfolgreichen Ankoppelung die Betriebsbremse beim Zugfahrzeug gelöst wird und ein kurzes Anziehen des Anhängerfahrzeuges mit dem Zugfahrzeug durchgeführt wird durch Einlegen eines Vorwärtsgangs und Aufprägen eines bestimmten Antriebsmomentes für eine definierte Zeit, wobei während dieser Zeit die Anzahl der Inkremente des Inkrementgebers erfasst wird oder der Abstand zwischen Zugfahrzeug und Anhängerfahrzeug gemessen wird. Ist das Anhängerfahrzeug erfolgreich angekoppelt und die Parkbremse des Anhängerfahrzeuges angezogen, so wird das Anhängerfahrzeug während des kurzen Aufprägens des Antriebsmomentes nicht oder nur geringfügig angezogen. Dementsprechend wird die Zahl der gemessenen Inkremente gering ausfallen. Ist die Parkbremse beim Anhängerfahrzeug gelöst, wird eine größere Zahl der Inkremente gezählt werden. Um für diesen Fall die korrekte Ankopplung verifizieren zu können, ist es vorteilhaft den Abstand zwischen Anhängerfahrzeug und Zugfahrzeug während des Anziehvorganges zu messen. Bleibt der Abstand im Rahmen eines Toleranzbereiches konstant, hat ein erfolgreicher Ankoppelvorgang stattgefunden.

Demgemäß ist es dann von Vorteil, wenn der erfolgreiche Ankoppelvorgang bestätigt wird, wenn die erfasste Anzahl der Inkremente des Inkrementgebers einen bestimmten Wert nicht überschreitet, oder der zum Ende des Anziehvorganges gemessene Abstand zwischen Zugfahrzeug und Anhängerfahrzeug den am Anfang des Anziehvorganges gemessenen Abstand um nicht mehr als einen Toleranzwert überschreitet.

Eine weitere Ausprägung der Erfindung besteht in einer Vorrichtung zum Steuern des assistierten oder automatischen Ankoppelns eines Anhängerfahrzeuges an ein Zugfahrzeug, wobei das Zugfahrzeug mit einer Antriebseinheit und einem Ankoppelelement, das eine Seitenführung für ein entsprechendes in das Ankoppelelement einzuführendes Ankoppelgegenstück des Anhängerfahrzeuges aufweist und einer elektronisch geregelten Betriebsbremse ausgestattet ist. Bei dieser Ausprägung der Erfindung, weist die Vorrichtung eine elektronische Verarbeitungseinheit auf, die über einen oder mehrere Kommunikationsbusse mit der elektronischen Steuereinheit der Antriebseinheit, und der elektronischen Steuereinheit der Betriebsbremse verbunden ist. Die Verarbeitungseinheit ist eingerichtet mit elektronischen Steuereinheit der Antriebseinheit, und der elektronischen Steuereinheit der Betriebsbremse zu kommunizieren, um Messwerte bzgl. Längs- und Querbeschleunigung des Zugfahrzeuges von einer Sensoreinheit zu empfangen und Ansteuerbefehle an die elektronische Steuereinheit der Betriebsbremse und die elektronische Steuereinheit der Antriebseinheit zu übertragen derart, dass das erfindungsgemäße Verfahren zum Steuern des assistierten oder automatischen Ankoppelns eines Anhängerfahrzeuges an ein Zugfahrzeug durchgeführt wird. Die Vorrichtung dient also zur Umsetzung des erfindungsgemäßen Verfahrens und mit ihr können die entsprechenden Vorteile des erfindungsgemäßen Verfahrens realisiert werden.

Die erwähnte Sensoreinheit der erfindungsgemäßen Vorrichtung sollte wenigstens einen ersten Beschleunigungssensor umfassen, der die Längsbeschleunigung des Zugfahrzeuges erfasst und einen zweiten Beschleunigungssensor umfassen, der die Querbeschleunigung des Zugfahrzeuges erfasst. Besonders vorteilhaft ist es dabei, wenn die Sensoreinheit an die elektronische Steuereinheit der Betriebsbremse angeschlossen ist. Die elektronische Betriebsbremse benötigt zumindest in der Ausführung bei der die Funktionalität eines elektronischen Stabilitätsprogramms (ESP) mitintegriert ist, eine solche Sensoreinheit. Wenn diese Sensoreinheit also bereits vorhanden ist, muss nur dafür gesorgt werden, dass die Sensormesswerte zyklisch an die Verarbeitungseinheit der erfindungsgemäßen Vorrichtung übertragen werden. Eine zusätzliche Sensoreinheit wird dann nicht benötigt. Dies reduziert die Kosten der erfindungsgemäßen Vorrichtung.

In einer anderen Ausführungsform der erfindungsgemäßen Vorrichtung wird an die Verarbeitungseinheit eine separate Sensoreinheit angeschlossen, die zur Messung der Längs- und Querbeschleunigung des Zugfahrzeuges dient. Als separate Sensoreinheit kann eine IMU-Einheit, entsprechend Inertial Measurement Unit, an die elektronische Verarbeitungseinheit angeschlossen werden. Solche IMU-Einheiten werden im Fahrzeugbereich in Großserie eingesetzt für bestimmte Fahrzeugdynamikregelungen, wie ESP. Die IMU-Einheit kann mehrere Beschleunigungssensoren und Drehratensensoren beinhalten. Mit den Drehratensensoren kann auch die Gierrate und Fahrzeugneigung in verschieden Richtungen gemessen werden. Im Besonderen sollte die Sensoreinheit wenigstens einen ersten Beschleunigungssensor umfassen, der die Längsbeschleunigung des Zugfahrzeuges erfasst und einen zweiten Beschleunigungssensor, der die Querbeschleunigung des Zugfahrzeuges erfasst.

Eine weitere vorteilhafte Ausführungsform der erfindungsgemäßen Vorrichtung besteht darin, dass der elektronischen Steuereinheit der Betriebsbremse ein oder mehrere Inkrementgebersensoren zugeordnet sind, wobei ein Inkrementgebersensor entweder einem Raddrehzahlsensor des Zugfahrzeuges entspricht oder einem Drehzahlgebersensor des Getriebes des Zugfahrzeuges. Diese Inkrementgebersensoren können, besonders, wenn es sich um aktive Raddrehzahlsensoren handelt, mit relativ hoher Auflösung die Bewegung des Zugfahrzeuges erfassen.

In einer Ausprägung der erfindungsgemäßen Vorrichtung weist das Ankoppelelement des Zugfahrzeuges eine Sattelplatte auf. Diese dient zum Ankoppeln von Anhängerfahrzeugen in Form von Sattelaufliegern. Bei diesen muss der Ankoppelvorgang besonders vorsichtig erfolgen, weil der Sattelauflieger auf Stützen steht.

In einer anderen Ausprägung weist das Ankoppelelement des Zugfahrzeuges eine Maulkupplung auf. Diese ist ebenfalls mit einer Seitenführung für ein Ankoppelgegenstück versehen, so dass sich das erfindungsgemäße Verfahren zum Ankoppeln eines Anhängerfahrzeuges an ein Zugfahrzeug darauf anpassen lässt. Das Ankoppelgegenstück besteht in einer Deichsel eines Deichsel-Anhängerfahrzeuges.

Eine weitere Ausprägung der Erfindung besteht in einem Zugfahrzeug mit einer Antriebseinheit und einer elektronisch geregelten Betriebsbremse und einem Ankoppelelement, das eine Seitenführung für ein entsprechendes in das Ankoppelelement einzuführendes Ankoppelgegenstück eines Anhängerfahrzeuges aufweist und einer erfindungsgemäßen Vorrichtung, wie beschrieben.

Des Weiteren besteht die Erfindung ebenfalls in einer elektronischen Verarbeitungseinheit, die über einen oder mehrere Kommunikationsbusse mit der elektronischen Steuereinheit der Antriebseinheit und der elektronischen Steuereinheit der Betriebsbremse verbunden ist und eingerichtet ist mit der Antriebseinheit, und der elektronisch Steuereinheit der Betriebsbremse zu kommunizieren, um Messwerte bzgl. Längs- und Querbeschleunigung des Zugfahrzeuges von einer Sensoreinheit zu empfangen und Ansteuerbefehle an die elektronische Steuereinheit der Betriebsbremse und der elektronischen Steuereinheit der Antriebseinheit zu übertragen, derart, dass die Schritte des automatisierten Ankoppelvorgangs nach dem erfindungsgemäßen Verfahren durchführbar sind.

Schließlich kann eine weitere Ausprägung der Erfindung ein Computerprogramm betreffen, dass Programmbefehle aufweist, die bei Abarbeitung in einer Prozessoreinheit eines Computers dazu führen, dass die Schritte des automatisierten Ankoppelvorgangs nach dem erfindungsgemäßen Verfahren ausgeführt werden.

Ausführungsbeispiele der Erfindung sind in den Zeichnungen dargestellt und werden nachfolgend anhand der Figuren näher erläutert.

Es zeigen:
- Fig. 1: ein Beispiel eines Betriebshofes auf dem Anhängerfahrzeuge abgestellt, abgeholt und rangiert werden;
- Fig. 2: ein Zugfahrzeug und ein Anhängerfahrzeug in der Art eines Sattelaufliegers, wobei das Zugfahrzeug mit dem Ankoppelelement auf Basis einer Sattelplatte ausgeführt ist und das Anhängerfahrzeug für das Ankoppeln an das Ankoppelelement mit Sattelplatte ausgeführt ist;
- Fig. 3: ein Blockschaltbild für die elektronische Ausstattung eines Zugfahrzeuges;
- Fig. 4: den Einsatz eines Inkrementgebers in Kombination mit einem aktiven Inkrementgebersensor zur Erfassung der Drehbewegung eines Rades eines Fahrzeuges;
- Fig. 5: ein Flussdiagramm für ein Computerprogramm zur Umsetzung des Verfahrens gemäß der Erfindung;
- Fig. 6: eine Darstellung von Ankoppelelement und Ankoppelgegenstück bei der Ausgangssituation zum Ankoppeln des Anhängerfahrzeuges nach erfolgter Ausrichtung von Zugfahrzeug und Anhängerfahrzeug;
- Fig. 7: eine Darstellung von Ankoppelelement und Ankoppelgegenstück bei Annäherung von Zugfahrzeug an das Anhängerfahrzeug zum Ankoppeln des Anhängerfahrzeuges;
- Fig. 8: eine Darstellung der wirkenden Kräfte bei Auftreffen des Königszapfens des Anhängerfahrzeuges an die rechte Seitenführung der Sattelplatte des Zugfahrzeuges;
- Fig. 9: eine Darstellung der wirkenden Kraft auf den Königszapfen des Anhängerfahrzeuges bei dem Vorgang des Einrastens des Königszapfens an der Zentralposition der Sattelplatte des Zugfahrzeuges;
- Fig. 10: eine Darstellung des Verlaufs der Geschwindigkeit des Zugfahrzeuges bei dem Ankoppelvorgang; und
- Fig. 11: eine Darstellung des typischen Verlaufs der Beschleunigungswerte für die gemessene Längs- und Querbeschleunigung bei dem Ankoppelvorgang zwischen Anhängerfahrzeug und Zugfahrzeug.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

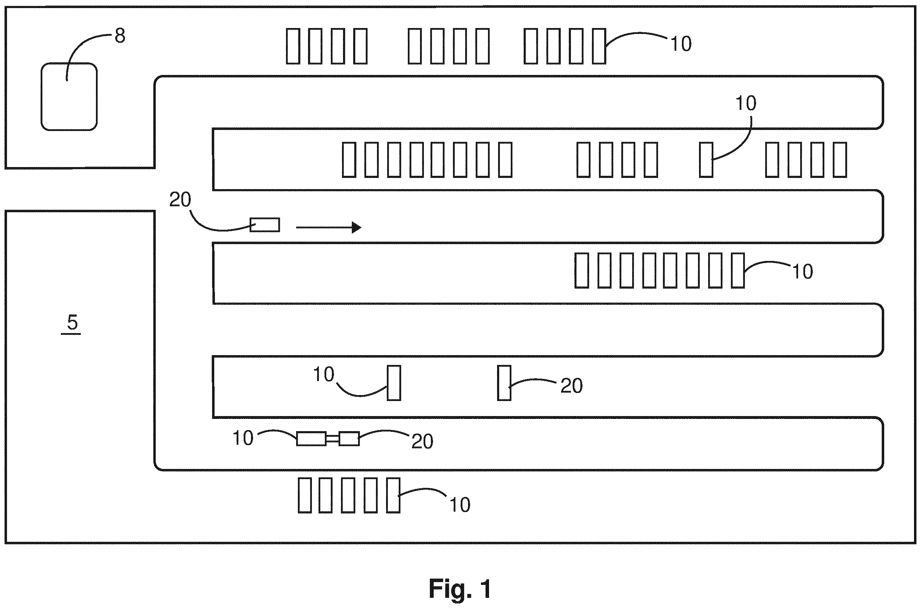

Fig. 1 zeigt den Betriebshof 5 eines Logistikunternehmens von oben. Dort gibt es Park- und Abstellflächen, wo Anhängerfahrzeuge 10 aber auch Zugfahrzeuge 20 abgestellt werden können. Unter dem Begriff Anhängerfahrzeug 10 wird hier ein Anhängerfahrzeug verstanden, das mit einem Ankoppelsystem für ein Zugfahrzeug 20 ausgestattet ist. Es handelt sich vorwiegend um Nutzfahrzeug-Anhänger. Diese sind oft als Sattelauflieger-Fahrzeug mit einem Ankoppelsystem ausgestattet, bei dem ein sogenannter Königszapfen des Anhängerfahrzeuges in eine Sattelplatte des Zugfahrzeuges geführt wird, bis zum Einrasten, wodurch eine drehbare Verbindung zwischen Zugfahrzeug 20 und Anhängerfahrzeug 10 entsteht. Es kann sich aber auch um andere Anhängerfahrzeuge handeln, beispielsweise Anhängerfahrzeuge, die in der Landwirtschaft benutzt werden, oder Anhängerfahrzeuge, die an Baufahrzeuge angehängt werden. Auch größere Wohnwagen, sowie Freizeit- und Sportanhänger, kommen in Betracht.

Bei dem Zugfahrzeug 20 kann es sich um ein typisches Zugfahrzeug 20 handeln. Dieses ist mit einem elektronischen Fahrassistenten oder einem elektronischen Fahrautomaten ausgestattet. Der Fahrassistent bzw. der Fahrautomat ist dafür ausgelegt den Ankoppelvorgang zwischen Zugfahrzeug und Anhängerfahrzeug zu vereinfachen bzw. zu automatisieren. Mit der Bezugszahl 8 ist eine zentrale Leitstelle des Betriebshofes 5 bezeichnet. Es gibt verschiedene Typen von Anhängern, auch Nutzfahrzeug-Anhängern. Diese können sich z.B. dadurch unterscheiden, dass sie mit Deichsel zum Ankoppeln an das Zugfahrzeug 20 ausgestattet sind oder als Auflieger mit Sattelplatte. Ein anderes Unterscheidungsmerkmal betrifft die Anzahl der Achsen. Mit dem hier benutzten Begriff Anhängerfahrzeug sollen alle Arten von Anhängerfahrzeugen 10 gemeint sein, die als Auflieger-Fahrzeug gestaltet sind. Die Prinzipien der Erfindung lassen sich aber auch auf andere Anhängerfahrzeuge übertragen, die z.B. als Deichsel-Anhängerfahrzeuge ausgeführt sind.

Wenn nun ein Anhängerfahrzeug 10 auf dem Betriebshof 5 eintrifft, wird er in der zentralen Leitstelle 8 erfasst und es wird dem Anhängerfahrzeug ein Abstellplatz zugewiesen. Den Anhängerfahrzeug wird an dem zugewiesenen Platz abgestellt. Typischerweise bleibt das Anhängerfahrzeug 10 nicht bis zur Abholung an diesem Platz stehen, sondern wird zum Umladen, Be- oder Entladen oder auch zu Wartungszwecken an einen anderen Platz rangiert. Im Folgenden wird davon ausgegangen, dass das Anhängerfahrzeug zur Abholung bereit an einen Abstellplatz rangiert wurde. Es wird jetzt der Abholvorgang näher erläutert. Der Fahrer, der das Anhängerfahrzeug 10 abholen soll, fährt sein Zugfahrzeug 20 an den Abstellplatz des Anhängerfahrzeuges 10 und richtet das Zugfahrzeug 20 zu dem Anhängerfahrzeug 10 so aus, dass ein Ankoppelvorgang automatisch oder assistiert stattfinden kann.

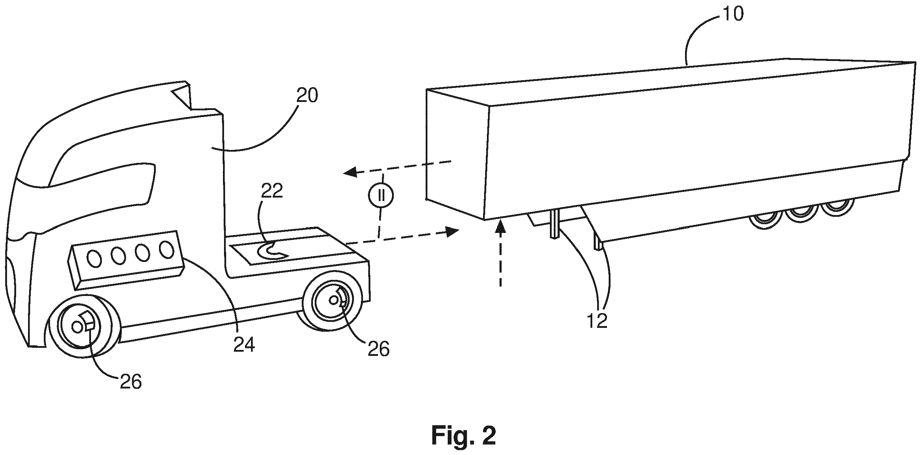

Fig. 2 zeigt das Zugfahrzeug 20 bei der Ausrichtung zum abholbereiten Anhängerfahrzeug 10. Wie dargestellt, handelt es sich um ein Sattelauflieger-Anhängerfahrzeug, das nur hintere Radachsen aufweist und vorne auf ausfahrbaren oder -klappbaren Stützen 12 steht. Zunächst wird das Zugfahrzeug 20 in Längsrichtung so zum Anhängerfahrzeug 10 ausgerichtet, dass der Königszapfen bei weiterer Rückwärtsfahrt des Zugfahrzeuges 20 in den Fangbereich der V-förmigen Öffnung der Sattelplatte 22-1 eintritt. Diese Fahrfunktion wird bei einer ersten Variante der Erfindung noch vom Fahrer des Zugfahrzeuges 20 durchgeführt. Die Ausrichtung beinhaltet eine Kontrolle, ob die Sattelplatte 22 des Zugfahrzeuges 20 Kontakt mit dem Chassis des Anhängerfahrzeuges 10 hat. Die Sattelplatte 22-1 ist typischerweise schräg montiert, so dass sie mit der geöffneten Seite tiefer steht als mit der dem Fahrerhaus zugewandten geschlossenen Seite. Dies kann durch Sichtkontrolle seitens des Fahrers erfolgen oder automatisch durch Schließen eines Kontaktes bei Berührung und Ausgeben einer Meldung an den Fahrer im Cockpit des Zugfahrzeuges 20.

Der Fahrer, der das Anhängerfahrzeug 10 abgestellt hat, hat auch die elektrischen und pneumatischen Verbindungsleitungen zum Zugfahrzeug 20 gelöst. Beim Lösen der Verbindungsleitungen wird die Federspeicher-Feststellbremse des Anhängerfahrzeuges 10 automatisch betätigt. Dies geschieht mit Hilfe sogenannter Tristopzylinder an allen oder einzelnen Rädern des Anhängerfahrzeuges 10, die mit Federspeicher ausgestattet sind. Sie sorgen durch Federkraft dafür, dass die Bremse angezogen wird, sobald der Tristopzylinder nicht mehr mit Druck beaufschlagt wird. Das Anhängerfahrzeug 10 ist aber auch mit einem Druckvorratsspeicher ausgestattet. Solange dieser Druck ausreicht, kann die Federspeicher-Feststellbremse durch Erhöhen des Drucks im Tristopzylinder wieder gelöst werden. Dafür sind die heutigen Anhängerfahrzeuge mit druckluftbetriebener Bremse zusätzlich mit einem Park-Löse-Sicherheitsventil ausgestattet. Beim Abstellen des Anhängerfahrzeuges, wird die Parkbremse entweder durch das Anziehen der Handbremse im Zugfahrzeug 20 seitens des Fahrers, oder durch das Abkuppeln des roten Kupplungskopfes vom Zugfahrzeug 20 betätigt. Mit dem schwarzen Betätigungsknopf am Park-Löse-Sicherheitsventil (Löseknopf der Betriebsbremsanlage) kann die Bremsanlage nach einer automatischen Bremsung bei abgestelltem Fahrzeug ohne Druckluftversorgung des Zugfahrzeugs 20 von Hand gelöst werden, wenn ausreichender Vorratsdruck im Druckvorratsspeicher vorhanden ist. Mit dem roten Betätigungsknopf (Betätigung der Feststellbremsanlage) kann die Parkbremse, durch Entlüften der Federspeicher, eingelegt bzw. wieder gelöst werden. Bei Abfall des Vorratsdruckes des abgestellten Anhängers übernehmen die Federspeicher automatisch die Bremswirkung und sichern das Fahrzeug gegen Wegrollen. Auf Betriebshöfen ist es aber häufig der Fall, dass die Parkbremse manuell von dem Betriebspersonal gelöst wird. Dies soll ein schnelleres An- und Abkoppeln ermöglichen. Für häufige Rangiervorgänge auf dem Betriebshof kann dies zur Zeitersparnis führen. Es wird daher im Folgenden für den Ankoppelvorgang davon ausgegangen, dass die Parkbremse des Anhängerfahrzeuges 10 entweder angezogen ist oder gelöst ist. Wenn die Parkbremse betätigt ist, ist das Anhängerfahrzeug 10 gegen Wegrollen gesichert. Anderenfalls allerdings nicht. Eine gewisse Stabilität ergibt sich dadurch, dass die Stützen 12, auf denen das Anhängerfahrzeug 10 steht einen Reibwiderstand bieten, die auch einen geringeren Schutz gegen Wegrollen bieten.

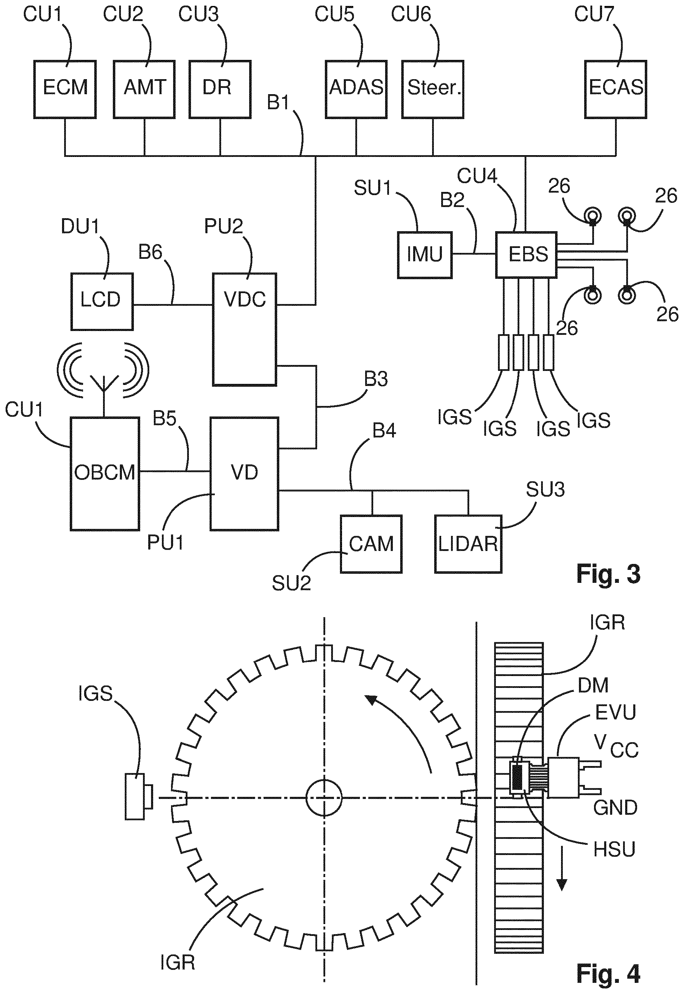

Fig. 3 zeigt die Struktur eines beispielhaften Fahrzeug-Elektroniksystems des Zugfahrzeuges 20. Es sind verschiedene elektronische Steuereinheiten vorgesehen. Der Block CU1 bezeichnet eine elektronische Motorsteuerung ECM, entsprechend "Engine Control Module". Der Block CU2 bezeichnet eine Automatikgetriebe-Steuereinheit AMT, entsprechend "Automated Manual Transmission". Der Block CU3 bezeichnet eine elektronische Steuereinheit der Retardereinheit. Diese dient zum Unterstützen eines Bremsvorgangs und kann ein Überhitzen der Reibbremsen an den Rädern verhindern. Der Block CU4 bezeichnet eine elektronische Bremssteuereinheit EBS, entsprechend "Electronic Braking System". Mit der Bezugszahl 26 ist jeweils eine Betriebsbremse pro Rad dargestellt. Jede Betriebsbremse 26 kann von der elektronischen Bremssteuereinheit EBS separat betätigt werden. Dazu sind die entsprechenden Bremsleitungen an die elektronische Bremssteuereinheit EBS angeschlossen. Mit der Bezugszahl IGS sind Inkrementgebersensoren bezeichnet. Diese sind mit dem elektronischen Bremssystem EBS des Zugfahrzeuges 20 verbunden. Typischerweise handelt es sich um Magnetfeldsensoren. An den Radkränzen ist ein Inkrementgeber montiert, der wie ein Zahnrad gestaltet ist und umlaufend Zähne aufweist. Das Zahnrad ist typischerweise aus ferromagnetischem Material gefertigt. Es kann sich um ein Material handeln, das für Permanentmagnete geeignet ist. Mit dem Inkrementgebersensor IGS wird ein elektrischer Impuls erzeugt, wenn ein Zahn des Zahnrades sich in seiner Drehbewegung an dem Inkrementgebersensor IGS vorbei bewegt. Damit der Impuls gut messbar ist, wird der Abstand zwischen umlaufenden Inkrementgeber und Inkrementgebersensor IGS klein gewählt.

Als Inkrementgebersensoren kommen zwei verschiedene Typen von Inkrementgebersensoren in Betracht. Die passiven Sensoren sind als Induktivgeber mit einer Spule und einem Magneten ausgestattet. Durch die Drehbewegung eines nah am Inkrementgebersensor vorbeilaufenden Inkrementrades ergibt sich bei ihnen periodisch eine Magnetfeldänderung, die in der Spule des Inkrementgebersensors eine Spannung induzierte. Darauf beruhende induktiven Raddrehzahlsensoren haben aber das Problem, dass sie erst ab einer bestimmten Raddrehzahl ein auswertbares Signal abgeben. Bei ihnen ist die Signalamplitude abhängig von der Raddrehzahl (Frequenz) und der Ausdehnung des Luftspaltes zwischen Raddrehzahlsenor und Inkrementgeber. Diese Nachteile führten zur Entwicklung von aktiven Sensoren, die mit Hall- Sensoren die Drehbewegung erfassen, deren Signale aber in einer eigenen Auswerteelektronik aufbereitet werden müssen. Der Hall-Sensor arbeitet nach dem Hall-Prinzip und hat die Besonderheit, dass es mit ihm möglich ist auch die Drehrichtung zu erfassen. Formal lassen sich aktive und passive Raddrehzahlsenoren wie folgt unterscheiden: Wird ein Sensor erst durch das Anlegen einer Versorgungsspannung "aktiviert" und generiert dann ein Ausgangssignal, wird dieser Sensor als "aktiv" bezeichnet. Arbeitet ein Sensor ohne eine zusätzliche Versorgungsspannung, wird dieser Sensor als "passiv" bezeichnet.

Die Fig.4 zeigt einen aktiven Inkrementgebersensor IGS, der mit einem Inkrementgeber in Form eines Inkrementrades IGR zusammenarbeitet. In dem gezeigten Fall arbeitet er mit einem Inkrementenrad IGR zusammen, das mit einem Rad des Zugfahrzeuges 20 oder dessen Antriebswelle, dessen Drehbewegung erfasst werden soll, starr verbunden ist. Der Inkrementgebersensor IGS ist direkt über dem Inkrementenrad IGR angebracht. Der Inkrementgebersensor IGS ist als aktiver Raddrehzahlsensor ausgebildet und besteht im Wesentlichen aus 2 Komponenten. Einer Sensoreinheit HS, in der ein einzelner oder mehrere Sensorelemente angeordnet sind. Beispiele solcher Sensorelemente sind Magnetfeldsensoren, insbesondere Hall-Sensoren oder magnetoresistive Widerstände. Es könnten aber auch andere Sensorelemente eingesetzt werden, wie induktive Sensoren oder optische Sensoren. Die andere wesentliche Komponente betrifft eine Auswerteelektronik EVU. Das Inkrementenrad IGR besteht bevorzugt aus Metall und hat eine Anzahl von Zähnen. Es könnten z.B. 100 Zähne am äußeren Umfang ausgebildet sein. Die Anzahl der Zähne bestimmt auch die Auflösung mit der der Inkrementgebersensor IGS den Umlauf des Rades messen kann. Bei 100 Zähnen beträgt die Auflösung für ein 19"-Rad ca. 1,5 cm. An der Sensoreinheit HSU ist noch ein Dauermagnet DM angebracht, dessen Magnetwirkung bis an das Inkrementenrad IGR heranreicht. Die Drehbewegung des Inkrementenrades IGR und der damit verbundene Wechsel von Zahn und Zahnlücke bewirkt eine Änderung des magnetischen Flusses durch die Sensoreinheit HS. Dieses sich ändernde Magnetfeld erzeugt in den Sensorelementen eine messbare Wechselspannung. Daraus können Inkrementsignale, z.B. in Form von Rechtecksignalen generiert werden, deren periodisch wiederkehrender Verlauf kann von einem Inkrementzähler gezählt werden.

Als Inkrementgeber kann auch ein Polring eingesetzt werden, der starr mit dem Rad oder dessen Antriebswelle verbunden ist. Der Polring wird typischerweise in einem Dichtring eines Radlagers eingesetzt. Der Polring weist abwechselnd magnetisierte Zonen mit den magnetischen Polen N, S auf. Die in der Sensoreinheit angeordneten Hall-Sensoren, erfassen bei der Drehung des Multipolringes ein wechselndes Magnetfeld, erzeugen ein Wechselstromsignal, dass in ein hochaufgelöstes Rechtecksignal umgewandelt werden kann, dessen Rechteckimpulse von dem Inkrementzähler gezählt werden können. Insofern kann der Polring auch als Inkrementgeber aufgefasst werden.

An die in Fig. 3 dargestellte Verarbeitungseinheit CU4 ist noch eine Sensoreinheit SU1 angeschlossen. Diese Sensoreinheit SU1 beinhaltet wenigstens zwei Beschleunigungssensoren, von denen der eine Beschleunigungssensor die Beschleunigung des Zugfahrzeuges 20 in longitudinaler Richtung erfasst und der andere Beschleunigungssensor die Beschleunigung in lateraler Richtung. Die Sensoreinheit SU1 kann optional noch weitere Sensoren beinhalten. Typischerweise kann als Sensoreinheit SU1 eine sogenannte IMU-Einheit entsprechend "Inertial Measurement Unit" eingesetzt werden. Solche IMU-Einheiten sind bekannt und beinhalten häufig noch Drehratensensoren mit denen die Fahrzeugneigung, und die Gierrate, usw. erfasst werden kann. Ein geeigneter Einbauort für die IMU-Einheit SU1 ist ein zentraler Platz am Chassis des Zugfahrzeuges 20. Wenn das Zugfahrzeug 20 mit einer Funktion zur Fahrzeugstabilisierung ausgestattet ist, ist eine solche IMU-Einheit SU1 erforderlich. In dem dargestellten Fall ist keine separate Steuereinheit zur Fahrzeugstabilisierung vorgesehen, die über einen Eingriff bei der Motorsteuerung und/oder der Bremssteuerung und/oder der Fahrwerksregelung das Fahrzeug stabil auf Kurs hält, indem es den auftretenden Fliehkräften entgegenwirkt. Stattdessen beinhaltet das elektronische Bremssystem EBS diese Funktion. Alternativ kann ein separates Steuergerät für die Fahrzeugstabilisierung vorgesehen werden. Ein solches Steuergerät wird auch ESC-Steuergerät genannt, entsprechend "Electronic Stability Control".

Der Block CU5 bezeichnet eine elektronische Steuereinheit eines Fahrerassistenzsystems ADAS, entsprechend "advanced driving assistance system". Z.B. kann es sich um ein Spurhaltesystem handeln, das den Fahrer unterstützt die Fahrspur einzuhalten, wenn das Fahrzeug auf einer mehrspurigen Straße, z.B. Autobahn unterwegs ist. Eine andere Variante eines Assistenzsystems ist ein automatisches Abstandsregelsystem, dass den Abstand zum vorausfahrenden Fahrzeug automatisch einhält. Der Block CU6 bezeichnet eine elektronische Steuerung für ein Lenksystem des Zugfahrzeuges 20. Der Block CU8 bezeichnet eine elektronische Steuerung für ein Luftfedersystem ECAS des Zugfahrzeuges 20, entsprechend "Electronic Control Air Suspension System". Darüber kann das Fahrzeugniveau angehoben oder abgesenkt werden. Auch kann das Fahrverhalten damit an verschiedene Fahrbahnbedingungen angepasst werden.

Diese elektronischen Steuereinheiten sind über ein Bussystem B1 miteinander vernetzt. Es kann zu diesem Zweck ein für die fahrzeuginterne Kommunikation ausgelegtes Bussystem eingesetzt werden. Typischerweise werden serielle Bussysteme zu diesem Zweck eingesetzt, da bei ihnen der Verkabelungsaufwand am Geringsten ist. Als mögliche Beispiele werden genannt ein CAN-Bussystem, entsprechend Controller Area Network. Es gibt verschiedene Varianten von dem CAN-Bussystem wie CAN Low Speed, und CAN High Speed für verschiedene Datenraten von 125 kBit/s, bis 1000 kBit/s. Weiterhin wurde ein erweiterter CAN-Bus spezifiziert unter der Bezeichnung CAN-FD Bus, wobei FD für "Flexible Data Rate" steht. Diese Spezifikation definiert einen erweiterten Datenrahmen mit höherer Transportkapazität, bei dem das Nutzdatenfeld vergrößert ist. Andere Kfz-Bussysteme sind unter den Bezeichnungen Flexray, und Automotive Ethernet, bekannt, die für die Vernetzung der elektronischen Steuereinheit ebenfalls eingesetzt werden können. Die Busarchitektur ist in Fig. 3 für den Bus B1 so dargestellt, dass eine gemeinsame Busleitung verwendet wird. Abweichend von dieser Darstellungsart ist es genauso möglich zu diesem Zweck mehrere verschiedene Busleitungen vorzusehen, wobei jeweils nur ausgewählte Steuereinheiten an eine dieser Busleitungen angeschlossen werden. Das ist insbesondere dann erforderlich, wenn die Datenrate nicht ausreicht alle Steuereinheiten gleichzeitig über eine Busleitung mit Daten zu versorgen. Damit die Daten dann auch an andere Steuereinheiten weitergeleitet werden können, ist es dann erforderlich ein oder mehrere Gateway-Stationen vorzusehen, die die Daten über einen angeschlossenen Bus empfangen und an einen anderen Bus weiterleiten können. Wenn es sich bei den beiden Bussystemen für Empfang und Weiterleitung um unterschiedliche Bussysteme handelt, ist die Gateway-Station dafür eingerichtet die nötige Protokollumsetzung durchzuführen.

Das Fahrzeug-Elektroniksystems besteht weiterhin aus den beiden Verarbeitungseinheiten PU1 und PU2. Es handelt sich um Verarbeitungseinheiten, die im Zusammenspiel eine oder mehrere automatische Fahrfunktion bereitstellen können.

Wie bekannt, sind von der SAE "Society of Automotive Engineering" verschiedene Stufen für die automatischen Fahrfunktionen definiert worden. Auf Stufe 1 muss der Fahrer nach wie vor die Kontrolle haben, während auf Stufe 5 das Fahrzeug vollautonom fährt und der Fahrer sich anderen Dingen zuwenden kann.

Die Verarbeitungseinheit PU1, auch als "Virtual Driver" bezeichnet, kann dabei eine Trajektorie bestimmen, auf der sich das Zugfahrzeug 20 in dem folgenden Zeitraum fortbewegen soll. Der Zeitraum kann sich von wenigen ms bis mehrere Minuten erstrecken. Dazu kann die Verarbeitungseinheit PU1 über ein weiteres Bussystem B4 mit einer Anzahl von Umgebungserfassungssensoren verbunden sein. Als Beispiel sind in Fig. 3 eine oder mehrere Kameras SU2 und ein LIDAR-Sensor SU3 gezeigt. Die Kameras SU2 können üblichen VideoKameras entsprechen. Alternativ oder zusätzlich kann ein RADAR-Sensor, ein oder mehrere IR-Kameras, und ein oder mehrere Ultraschallsensoren (nicht gezeigt) zur Umgebungserfassung angeschlossen werden. Als ein geeignetes Bussystem B4, dass für die Übertragung der Kameradaten und der LIDAR-Daten geeignet ist, wird als Beispiel das Automotive Ethernet-Bussystem in der Variante IEEE 100BaseT1 bzw. IEEE 1000Base-T1 genannt.

Die Verarbeitungseinheit PU1 sendet die für den entsprechenden Zeitraum vorausberechnete Trajektorie an die Verarbeitungseinheit PU2 über den Kommunikationsbus B3. Die zweite Verarbeitungseinheit PU2 ist dafür vorgesehen, die vorgegebene Trajektorie in entsprechende Ansteuerbefehle für die verschiedenen Steuereinheiten umzusetzen und das Fahrzeug so zu steuern, dass das Fahrzeug auf der vorgegebenen Trajektorie fährt. Diese Ansteuerbefehle werden über den Bus B1 an die verschiedenen Steuereinheiten CU1 bis CU7 übertragen. Diese Verarbeitungseinheit PU2 kann deshalb als "Virtual Driving Coordinator" bezeichnet werden. Dieser Verarbeitungseinheit PU2 kommt für das "autonome Fahren" besondere Bedeutung zu, denn die Einheit muss über genaue Kenntnis, der von den elektronischen Steuervorrichtungen zu erwartenden Steuerbefehlen und deren Auswirkungen verfügen. An die Verarbeitungseinheit PU1 ist weiterhin eine Anzeigeeinheit DU1 angeschlossen. Diese wird in vorteilhafter Weise als berührungsempfindliche Anzeigeeinheit (Touchscreen) im Cockpit des Zugfahrzeuges 20 angeordnet. Damit können vielfältige Bedienungen durchgeführt werden. Dazu werden Bedienmenüs auf der Anzeigeeinheit dargestellt. Der Fahrer kann Menüpunkte anwählen Parametereinstellungen ändern und Eingaben machen, wie es z.B. von Smartphones oder Tablets bekannt ist. Die Anzeigeeinheit DU1 ist über eine Busverbindung mit der Verarbeitungseinheit PU2 verbunden. Darüber werden die Anzeigedaten übertragen und die Bedienbefehle und Eingaben, die der Fahrer eingegeben hat, von der Anzeigeeinheit DU1 an die Verarbeitungseinheit PU1 übertragen. Als Beispiel wird das LVDS-Bussystem erwähnt, entsprechend (Low Voltage Differential Signal), das für diese Zwecke entwickelt wurde.

Die Fig. 3 zeigt noch ein Kommunikationsmodul CM1, das an die Verarbeitungseinheit PU1 über den Kommunikationsbus B5 angeschlossen ist. Dieses Kommunikationsmodul CM1 ist für die drahtlose Kommunikation mit anderen Fahrzeugen und die Verbindung zu öffentlichen Kommunikationssystemen, wie öffentlichen Mobilfunk-Kommunikationssystemen, z.B. LTE und 5G ausgestattet. Darüber kann das Fahrzeug auch eine Verbindung zum Internet herstellen. Für die Kommunikation zu anderen Fahrzeugen kann z.B. ein WLAN-Modul in dem Kommunikationsmodul CM1 vorgesehen werden oder es wird zu diesem Zweck die sogenannte "Sidelink"-Kommunikationsfähigkeit des LTE-Modems eingesetzt oder die sogenannte "PC5" Kommunikationsfähigkeit des 5G-Modems.

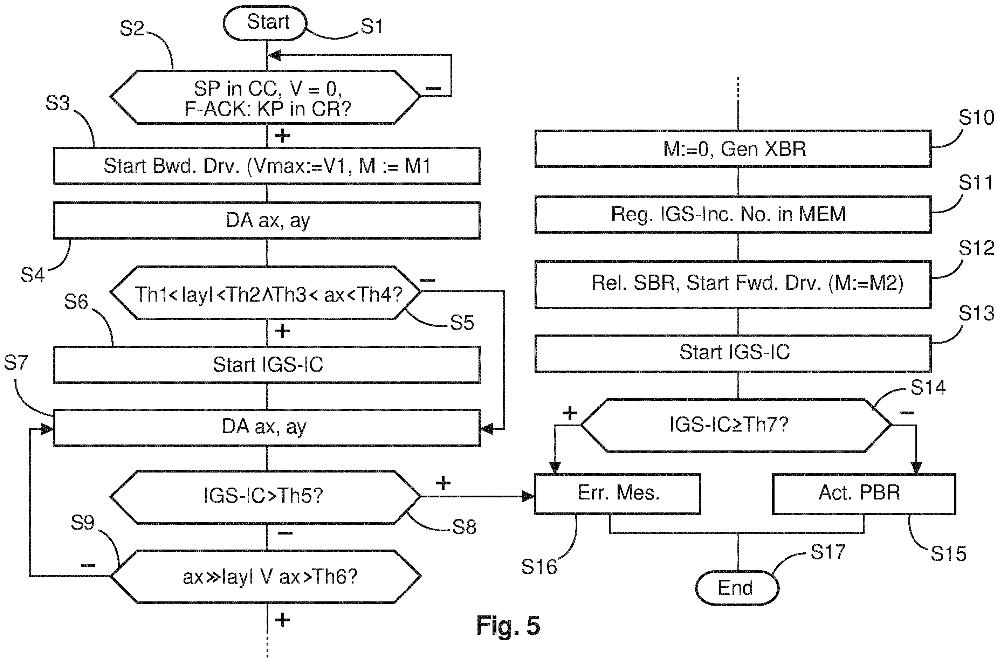

Die Funktionsweise der Fahrzeugelektronik zur Unterstützung des Ankoppelvorganges wird jetzt anhand des Flussdiagramms in Fig. 5 erläutert. Dieses ist für das assistierte Ankoppelmanöver ausgelegt. Der Fahrer hat die Vorausrichtung des Zugfahrzeuges 20 in Bezug auf das abgestellte Anhängerfahrzeug 10 bereits vollzogen und die Assistenzfunktion für das Ankoppelmanöver durch Drücken eines Schalters oder Anwählen eines Menüpunktes in einem Benutzermenü auf der Anzeigeeinheit DU1 angefordert. Das zugehörige Computerprogramm wird von einer Prozessoreinheit in der Verarbeitungseinheit PU2 abgearbeitet. Der Start des Programms für den Standby-Betrieb ist mit dem Bezugszeichen S1 bezeichnet. Im Programmschritt S2 wartet das Programm auf die Bestätigung seitens des Fahrers, dass Zugfahrzeug 20 und Anhängerfahrzeug 10 korrekt ausgerichtet sind und die Sattelplatte 22-1 Kontakt zum Chassis des Anhängerfahrzeuges 10 hat und der Königszapfen 14 sich im Fangbereich 22-5 der Sattelplatte 22-1 befindet. Die Sattelplatte ist in der Höhe verstellbar. Der Fahrer kann mit der Verstellvorrichtung die Höhe der Sattelplatte 22-1 entsprechend wählen. Der Vorgang der Höhenausrichtung ist in der Fig. 2 durch einen vertikalen Pfeil angedeutet. Eine Möglichkeit der Höhenanpassung besteht in der Niveauregulierung des Zugfahrzeuges. Bei Fahrzeugen mit Luftfedersystemen besteht diese Möglichkeit. Eine andere Form der Realisierung einer Höhenanpassung besteht in der Möglichkeit die Sattelplatte mit einer Hydraulik zu versehen, die die Höhenverstellung der Sattelplatte bewirkt. Der Vorgang der Längsausrichtung ist in der Fig. 2 durch zwei horizontale Pfeile angedeutet. Die Längsachsen von Zugfahrzeug 20 und Anhängerfahrzeug 10 sollten parallel ausgerichtet werden. Weiterhin ist darauf zu achten, dass das Zugfahrzeug 20 mittig zu Stirnseite des Anhängerfahrzeuges 10 ausgerichtet wird, damit der Königszapfen 14 in den Fangbereich 22-5 der Sattelplatte 22-1 gelangt.

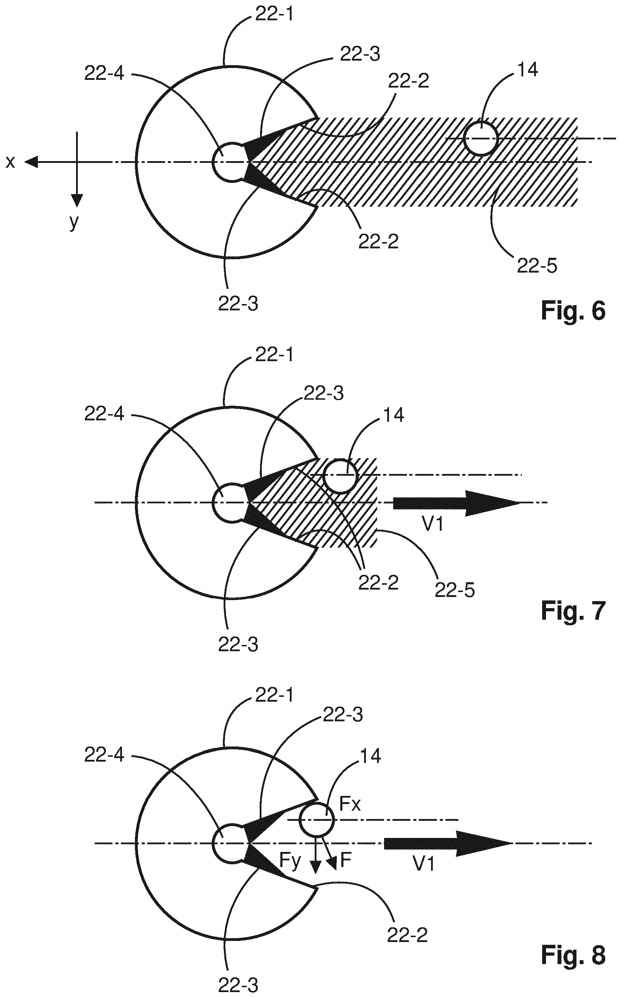

Die Fig. 6 zeigt die Ausgangssituation bei korrekter Ausrichtung des Zugfahrzeuges 20 zum Anhängerfahrzeug 10. Der Königszapfen des Anhängerfahrzeuges 10 ist mit der Bezugszahl 14 markiert. Die Längsrichtung des Zugfahrzeuges 20 ist durch eine strich-punktierte Linie mit Koordinatenkreuz dargestellt. Die Längsrichtung, auch longitudinale Richtung genannt, entspricht der x-Achse dieses Koordinatenkreuzes. Die seitliche Richtung, auch laterale Richtung genannt, entspricht der y-Achse dieses Koordinatenkreuzes. Der schraffierte Bereich 23 entspricht dem Fangbereich 22-5 der Sattelplatte 22-1. Der Königszapfen 14 soll in das Zentrum der Sattelplatte 22-1 gebracht werden. Dazu ist die Sattelplatte 22-1 so gestaltet, dass sie eine V-förmige Öffnung aufweist. Die beiden Seitenflächen 22-2 dieser V-förmigen Öffnung dienen als Gleitflächen, an denen der Königszapfen 14 entlanggleitet, wenn sich das Zugfahrzeug 20 nicht ganz zentral dem Königszapfen 14 nähert. Dann wird das Anhängerfahrzeug 10 seitlich etwas bewegt, so dass der Königszapfen 14 an die zentrale Position 22-4 in der Mitte der Sattelplatte 22-1 gelangt. Kurz vor Eintritt in die Rastposition muss der Königszapfen 14 zwei Rastelemente 22-3 zur Seite drücken, damit die Zentralstelle 22-4 frei zugänglich wird. Die Rastelemente 22-3 werden durch Federkraft gehalten, so dass ein Widerstand überwunden werden muss, damit der Königszapfen 14 an der Zentralposition einrasten kann. Das Zugfahrzeug 20 muss deshalb mit einer Mindestgeschwindigkeit von ca. 1 km/h gegen den Königszapfen 14 anfahren, damit der Einrastvorgang stattfinden kann.

Wenn die Bedingungen in Abfrage S2 noch nicht erfüllt sind, verzweigt das Programm zurück zum Anfang des Programms, so dass die Abfrage in Programmschritt S2 erneut aufgerufen wird. Wenn alle abgefragten Bedingungen erfüllt sind, wird im Programmschritt S3 eine Rückwärtsfahrt des Zugfahrzeuges 20 zum Ankoppeln des Anhängerfahrzeug 10 gestartet. Dazu sendet die Verarbeitungseinheit PU2 einen Befehl zum Einlegen eines Rückwärtsganges an die Getriebesteuereinheit CU2 und einen anderen Befehl zum Einstellen eines Motormomentes auf den Wert M1 an die Motorsteuereinheit CU1.

Im Programmschritt S4 wird die Längs- und Querbeschleunigung ax und ay erfasst. Die gemessenen Beschleunigungswerte sendet die elektronische Bremssteuereinheit CU4 an die Verarbeitungseinheit PU2. Die Verarbeitungseinheit PU2 wertet die Beschleunigungswerte im nachfolgenden Schritt S5 aus. Zum einen wird bei der Auswertung bestimmt, ob die Querbeschleunigung ay in einem gewünschten Bereich zwischen Th1 und Th2 aufgetreten ist. Dazu wird der Betrag des Wertes der Querbeschleunigung ay mit den beiden Intervall-Grenzwerten Th1 und Th2 verglichen. Zum anderen wird überprüft, ob die gemessene Längsbeschleunigung ax in einem bestimmten Bereich zwischen Th3 und Th4 liegt. Diese Bereiche sind so gewählt, dass die beim Aufprallen des Königszapfens 14 an einer Seitenfläche 22-2 der Öffnung der Sattelplatte 22-1 des Zugfahrzeuges 20 typische entstehende Quer- und Längsbeschleunigung erfasst werden kann.

Fig. 7 zeigt den sich an die Sattelplatte 22-1 annähernden Königszapfen 14 wobei das Zugfahrzeug 20 sich mit der gewünschten Geschwindigkeit V1 zurückbewegt.

Fig. 8 zeigt den Moment, bei dem der Königszapfen 14 des Anhängerfahrzeuges 10 an die rechte Seitenfläche 22-2 der V-förmigen Öffnung der Sattelplatte 22-1 prallt. Die an dem Königszapfen 14 auftretende Kraft ist mit F bezeichnet. Die laterale Komponente der Kraft F ist mit Fy bezeichnet. Damit einher geht eine entsprechende in der Gegenrichtung wirkende Querbeschleunigung ay des Zugfahrzeuges 20. Diese wird von dem entsprechenden Beschleunigungssensor der IMU-Einheit SU1 gemessen.

Wenn in der Abfrage S5 des Computerprogramms eine der beiden Bedingungen oder beide Bedingungen nicht erfüllt sind, verzweigt das Programm zum Schritt S7 in dem auf die nächsten eintreffenden Messwerte von der IMU-Einheit SU1 gewartet wird. Typischerweise sendet die elektronische Bremssteuereinheit CU4 im Takt von 10 ms die Messwerte der IMU-Einheit an die Verarbeitungseinheit PU2.

Wenn beide Bedingungen von Abfrage S5 erfüllt sind, wird das Programm mit Programmschritt S6 fortgesetzt. Darin wird ein Zähler gestartet, der die Inkremente der von einem Raddrehzahlsensoren abgegebenen Inkrementsignale zählt. Das Zählen der Inkremente hat den Zweck die Strecke zu messen, die vom Berühren der Sattelplatte 22-1 bis zum Auftreffen des Königszapfen 14 im Zentralpunkt der Sattelplatte 22-1 vergeht.

Im nächsten Programmschritt S7 wird wieder die Längs- Querbeschleunigung ax, ay erfasst. Der Schritt entspricht daher dem Programmschritt S4.

In nächsten Programmschritt S8 wird die Anzahl der gezählten Raddrehzahlsensor-Inkremente ausgewertet. Wenn die erfasste Raddrehzahlsensor-Inkrementzahl den Wert Th5 überschreitet, verzweigt das Programm zum Programmschritt S16 in dem eine Fehlermeldung generiert wird, die dem Fahrer zur Anzeige gebracht wird. In diesem Fall ist bereits eine längere Strecke zurückgelegt worden als erwartet, weil ja dann der erste Aufprall an der Seitenfläche 22-2 bereits stattgefunden hat. Anderenfalls wäre die Zählung der Inkremente im Programmschritt S6 nicht gestartet worden. Der Vergleichswert Th5 ist gerade so gewählt, dass er nur dann überschritten wird, wenn eine längere Strecke gemessen wurde als bei Aufprall an einer der Seitenflächen 24 maximal möglich.

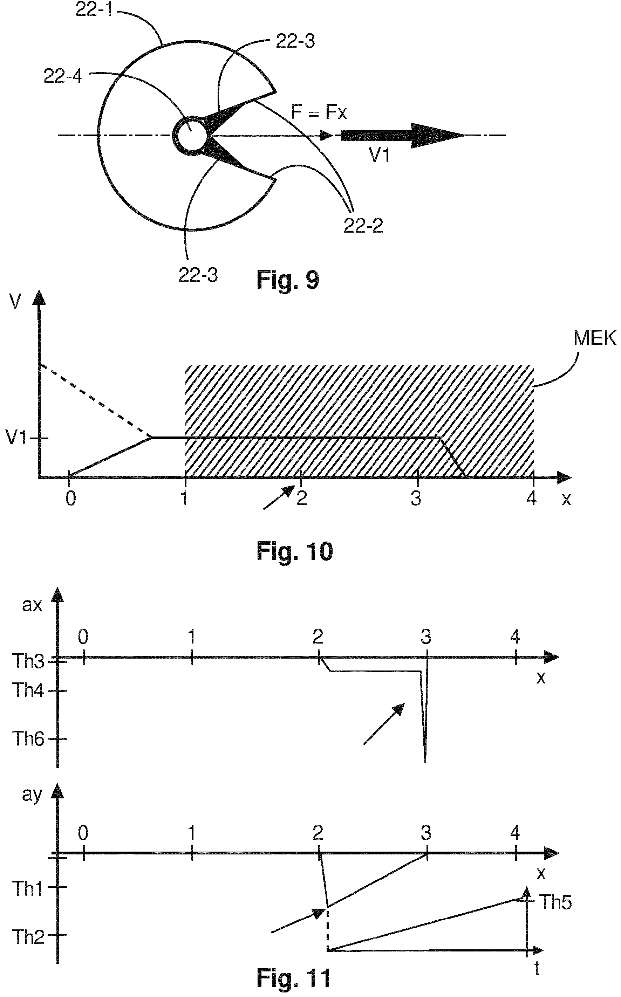

Wenn der Wert Th5 nicht überschritten wurde, wird im darauffolgenden Programmschritt S9 die erfasste Längsbeschleunigung ax ausgewertet. Zum einen wird getestet, ob die Längsbeschleunigung ax sehr viel größer als der in Programmschritt S4 gemessene Betrag der Querbeschleunigung ay ist. Bei Auftreffen des Königszapfens 14 an der Zentralstelle 22-4 der Sattelplatte 22-1 nach Entlanggleiten an einer Seitenfläche 22-2 im Fangbereich 22-5 der Sattelplatte 22-1 wird diese Bedingung erfüllt. In der Fig. 11 wird ein Beispiel gezeigt, um wieviel größer der Longitudinal-Beschleunigungswert ax als der bei Seitenaufprall auftretende Querbeschleunigungswert typischerweise ist.

Die Fig. 9 zeigt noch die Verhältnisse, wenn der Königszapfen 14 an der Zentralstelle 22-4 der Sattelplatte 22-1 eingerastet ist. In dem Fall wirkt auf den Königszapfen 14 bei Aufprall eine hohe Kraft F, die ausschließlich eine longitudinale Komponente aufweist.

Zum anderen wird in Abfrage S9 ausgewertet, ob der gemessene Wert der Längsbeschleunigung ax einen Grenzwert Th6 übersteigt. Diese Bedingung kann erfüllt werden, wenn das Zugfahrzeug 20 so zentral zum Anhängerfahrzeug 10 bewegt wird, dass der Königszapfen 14 die Sattelplatte 22-1 an der Zentralstelle 22-4 trifft, und es vorher nicht zu einer Berührung der Seitenfläche 22-2 im Öffnungsbereich der Sattelplatte 22-1 kommt. Wenn keine der beiden Bedingungen von Abfrage S9 erfüllt ist, verzweigt das Programm zurück zu Programmschritt S7 und wartet auf den Eingang neuer Beschleunigungswerte. Ist eine der Bedingungen erfüllt, wurde ein Ankoppelvorgang erkannt. Im folgenden Programmschritt S10 wird dann direkt das Motormoment auf den Wert Null reduziert und die Betriebsbremse 26 des Zugfahrzeuges 20 betätigt. Dies ist wichtig, um zu verhindern, dass das Zugfahrzeug 20 den ev. nicht mit angezogener Parkbremse stehenden Anhänger weiterschiebt. Dies könnte nämlich zur Beschädigung der Stützen 12 oder des Chassis des Anhängerfahrzeuges 10 führen.

Danach werden im Programmschritt S11 die gezählten Inkrementzahlen der Inkrementgebersensoren IGS in einem nichtflüchtigen Speicherbereich der Verarbeitungseinheit PU2 gespeichert. Diese Werte dienen als Referenz für zukünftige Ankoppelvorgänge. Eine Lernfunktion kann diese Werte statistisch auswerten und z.B. eine Vorhersage treffen nach wieviel Inkrementen der Königszapfen 14 die Zentralstelle 22-4 der Sattelplatte 22-1 treffen dürfte. Dies kann dann zum vorverlegten Abschalten des Motormomentes benutzt werden, um den Aufprall der Sattelplatte 22-1 auf den Königszapfen 14 zu reduzieren. So können Aufprallschäden möglichst gut unterbunden werden.

Im Programmschritt S12 wird die Betriebsbremse 26 durch Senden eines entsprechenden Steuerbefehles an die elektronische Bremssteuereinheit CU4 gelöst. Ebenfalls wird ein kurzes Anziehen des Anhängerfahrzeug 10 durch das Zugfahrzeug 20 gestartet. Dazu muss wieder ein Steuerbefehl zum Einlegen eines Vorwärtsgangs an die Getriebesteuereinheit CU2 gesendet werden. Ebenfalls wird ein Steuerbefehl zum Anfordern eines Motormomentes M2 an das Motorsteuergerät CU1 gesendet. Das Aufprägen des Motormomentes an den Antriebstrang des Zugfahrzeuges 20 geschieht nur für kurze Zeit, z.B. für 1 s. Im nächsten Programmschritt S13 wird die Zählung der Raddrehzahlinkremente gestartet während der eingestellten Zeit von 1 s. Anschließend erfolgt im Programmschritt S14 die Abfrage ob die Anzahl der gezählten Drehzahlinkremente den Wert von Th7 überschreiten. Dies sollte nicht der Fall sein, wenn bei dem Anhängerfahrzeug 10 die Parkbremse angezogen war.

Wenn das erfolgreiche Ankoppeln bestätigt wurde, wird noch im Programmschritt S15 die Parkbremse des Zugfahrzeug 20 betätigt. Wenn sich in Abfrage S14 ergibt, dass der Wert Th7 überschritten wird, verzweigt das Programm zum Programmschritt S16 in dem eine Fehlermeldung an den Fahrer ausgegeben wird. Das Programm endet im Programmschritt S17.

Für den Fall, dass die Parkbremse nicht angezogen war, kann der Abstand zwischen Zugfahrzeug 20 und Anhängerfahrzeug 10 beim Start und Ende des Anziehvorgangs gemessen werden und eine Abfrage vorgesehen werden, die beide Messwerte miteinander vergleicht. Wenn der Unterschied einen Toleranzwert nicht überschreitet, war der Ankoppelvorgang erfolgreich. Das Messen des Abstandes kann mit Kamera, Ultraschallsensoren, oder einer anderen Messtechnik für Entfernungsmessungen in dem Bereich von wenigen Zentimetern bis zu 2 Metern erfolgen.

Der Fahrer wird nach Ausgabe der Fehlermeldung eine Sichtprüfung vornehmen und ggfs. das Fahrzeug neu ausrichten und den Ankoppelvorgang neu starten. Bei erfolgreicher Kopplung muss er noch die Verbindungsleitungen zwischen Zugfahrzeug 20 und Anhängerfahrzeug 10 anschließen, bevor er den Betriebshof mit dem angekoppelten Anhängerfahrzeug 10 verlassen kann.

Ausführlich beschrieben wurde das Flussdiagramm für die Assistenzfunktion zum Ankoppeln eines Anhängerfahrzeuges 10 an ein Zugfahrzeug 20. Alternativ kann auch ein vollautomatisiertes Ankoppeln mit einem erweiterten Programm realisiert werden. Beim automatischen Ankoppeln würde sich das Zugfahrzeug 20 mit niedriger Geschwindigkeit dem Anhängerfahrzeug 20 nähern. Der Abstand zwischen Zugfahrzeug 20 und Anhängerfahrzeug 10 wird überwacht. Die Geschwindigkeit wird bei weiterer Annäherung auf den gewünschten Wert V1 reduziert. Danach ist der Ablauf wie bei der Assistenzfunktion.

Die Fig. 10 zeigt den Geschwindigkeitsverlauf über die Distanz bei dem Ankoppelvorgang einmal für den assistierten Ankoppelvorgang durchgezogene Linie und den automatischen Ankoppelvorgang gestrichelte Linie. Der schraffierte Bereich MEK entspricht dem Bereich, in dem der erste Kontakt des Königszapfen 14 mit der Sattelplatte 22-1 erfolgen sollte, bis zum Aufprall an der Zentralstelle 22-4 der Sattelplatte 22-1. Der Pfeil kennzeichnet die Stelle des Erstkontakts.

Die Fig. 11 zeigt den typischen Verlauf der gemessenen Beschleunigungswerte ax, ay bei dem typischen Ankoppelvorgang. Die Distanzwerte sind wie bei Fig. 10 aufgetragen. Im dargestellten Fall tritt der Erstkontakt des Königszapfen 14 an der rechten Seitenfläche 22-2 der Öffnung der Sattelplatte 22-1 bei der Distanz 2 auf. Dort wird eine hohe Querbeschleunigung ay gemessen. Gleichzeitig wird eine geringe Längsbeschleunigung ax gemessen. Während die Querbeschleunigung ay linear abnimmt bei weiterer Annäherung, bleibt die Längsbeschleunigung ax relativ konstant. Am Punkt 3 der Distanzwerte erfolgt das Einrasten des Königszapfen 14 an die Zentralstelle 22-4 der Sattelplatte 22-1. Dort wird eine hohe Spitze bei der Längsbeschleunigung ax gemessen. Diese ist um einen Faktor größer als die zuvor an Punkt 2 gemessene Querbeschleunigung ay. Im dargestellten Fall ist die Längsbeschleunigung am Punkt 3 ca. doppelt so hoch, wie die an Punkt 2 gemessene Querbeschleunigung. Wenn bis zur Distanz 4 keine Spitze bei der Längsbeschleunigung ax beobachtet wird, muss der Ankoppelvorgang durch Betätigen der Betriebsbremse 26 abgebrochen werden. In Fig. 11 sind die bereits erwähnten Schwellwerte Th1 bis Th6 eingezeichnet. Die genauen Schwellwerte werden durch Messreihen an einem real existierenden Produkt bei der Durchführung von Versuchsankopellmanövern ermittelt. In die Fig. 11 ist im unteren Diagramm ebenfalls das Hochzählen eines Inkrementzählers dargestellt. Dieser wird durch Erfassung einer Querbeschleunigung ay im Wertebereich zwischen den Schwellwerten Th1 und Th2 gestartet und bei Erfassen eines Aufprallpulses im Wertebereich oberhalb von Th6 gestoppt.

Alle hierin erwähnten Beispiele wie auch bedingte Formulierungen sind ohne Einschränkung auf solche speziell angeführten Beispiele zu verstehen. So wird es zum Beispiel von Fachleuten anerkannt, dass das hier dargestellte Blockdiagramm eine konzeptionelle Ansicht einer beispielhaften Schaltungsanordnung darstellt. In ähnlicher Weise ist zu erkennen, dass ein dargestelltes Flussdiagramm, Zustandsübergangsdiagramm, Pseudocode und dergleichen verschiedene Varianten zur Darstellung von Prozessen darstellen, die im Wesentlichen in computerlesbaren Medien gespeichert und somit von einem Computer oder Prozessor ausgeführt werden können.

Es sollte verstanden werden, dass das vorgeschlagene Verfahren und die zugehörigen Vorrichtungen in verschiedenen Formen von Hardware, Software, Firmware, Spezialprozessoren oder einer Kombination davon implementiert werden können. Spezialprozessoren können anwendungsspezifische integrierte Schaltungen (ASICs), Reduced Instruction Set Computer (RISC) und / oder Field Programmable Gate Arrays (FPGAs) umfassen. Vorzugsweise wird das vorgeschlagene Verfahren und die Vorrichtung als eine Kombination von Hardware und Software implementiert. Die Software wird vorzugsweise als ein Anwendungsprogramm auf einer Programmspeichervorrichtung installiert. Typischerweise handelt es sich um eine Maschine auf Basis einer Computerplattform, die Hardware aufweist, wie beispielsweise eine oder mehrere Zentraleinheiten (CPU), einen Direktzugriffsspeicher (RAM) und eine oder mehrere Eingabe/Ausgabe (I/O) Schnittstelle(n). Auf der Computerplattform wird typischerweise außerdem ein Betriebssystem installiert. Die verschiedenen Prozesse und Funktionen, die hier beschrieben wurden, können Teil des Anwendungsprogramms sein oder ein Teil, der über das Betriebssystem ausgeführt wird.

Die Offenbarung ist nicht auf die hier beschriebenen Ausführungsbeispiele beschränkt.

### Bezugszeichenliste (Teil der Beschreibung)

- 5: Betriebshof
- 8: Leitstelle
- 10: Anhängerfahrzeug
- 12: Stütze
- 14: Königszapfen
- 20: Zugfahrzeug
- 22: Ankoppelelement
- 22-1: Sattelplatte
- 22-2: Seitenführung
- 22-3: Rastelement
- 22-4: Zentralstelle
- 22-5: Fangbereich
- 24: Antriebseinheit
- 26: Betriebsbremse

- ax: Längsbeschleunigung
- ay: Querbeschleunigung
- CM1: On-Board Kommunikationsmodul
- CU1: elektronische Motorsteuerung
- CU2: elektronische Getriebesteuerung
- CU3: elektronische Retardersteuerung
- CU4: elektronische Bremssteuerung
- CU5: elektronisches Fahrerassistenzsystem
- CU6: elektronisches Lenksystem
- CU7: elektronische Fahrwerkssteuerung
- DM: Dauermagnet
- EVU: Auswerteeinheit
- GND: Masse
- IGR: Inkrementrad
- IGS: Inkrementgebersensor
- HSU: Hall-Sensoreinheit
- M1: 1. Antriebsmoment
- M2: 2. Antriebsmoment
- MEK: mutmaßlicher Erstkontaktbereich
- PU1: elektronische Verarbeitungseinheit (Virtual Driver)
- PU2: elektronische Verarbeitungseinheit (Vitual Driving Coordinator)
- SU1: IMU-Einheit
- SU2: Kamera
- SU3: LIDAR-Sensor
- Th1: 1. Schwellwert
- Th2: 2. Schwellwert
- Th3: 3. Schwellwert
- Th4: 4. Schwellwert
- Th5: 5. Schwellwert
- Th6: 6. Schwellwert
- Th7: 7. Schwellwert
- S1-S17: verschiedene Programmschritte eines Computerprogramms
- V1: 1. Geschwindigkeit
- V2: 2. Geschwindigkeit
- Vcc: Versorgungsspannung

## Patentansprüche

1. Verfahren zum assistierten oder automatischen Ankoppeln eines Anhängerfahrzeuges (10) an ein Zugfahrzeug (20), wobei das Zugfahrzeug (20) mit einem Ankoppelelement (22), das eine Seitenführung (22-2) für ein entsprechendes in das Ankoppelelement (22) einzuführendes Ankoppelgegenstück (14) des Anhängerfahrzeuges (10) aufweist, einer elektronisch geregelten Betriebsbremse (26) und einer Antriebseinheit (24) ausgestattet ist, wobei nach Ausrichtung und Annäherung des Zugfahrzeuges (20) bezogen auf das Anhängerfahrzeug (10) ein automatisierter Ankoppelvorgang gestartet wird, der die Schritte, Starten einer Rückwärtsfahrt mit einer bestimmten Geschwindigkeit und einem bestimmten Antriebsmoment (M1; S3), Erfassen der Längs- und Querbeschleunigung (S4) des Zugfahrzeuges (20) umfasst und **gekennzeichnet ist, durch** die Schritte, bei Auftreten einer Querbeschleunigung (ay) in einem ersten Wertebereich (Th1, Th2) mit Auftreten einer Längsbeschleunigung (ax) in einem zweiten Wertebereich (Th3, Th4; S5) und anschließendem Auftreten einer Längsbeschleunigung (ax) in einem dritten Wertebereich (S9), Stoppen der Rückwärtsfahrt (S10) **durch** Abschalten des Antriebsmomentes (M1) und/oder Betätigen der Betriebsbremse (26).

2. Verfahren nach Anspruch 1, wobei der dritte Wertebereich mindestens um einen bestimmten Wert größer ist als der Absolutwert der zuvor erfassten Querbeschleunigung (ay).

3. Verfahren nach Anspruch 1 oder 2, **dadurch gekennzeichnet, dass** vor dem Starten der Rückwärtsfahrt (S3) das Niveau des Zugfahrzeuges (20) an die Höhe des Anhängerfahrzeuges (10) angepasst wird und in einem Schritt (S2) überprüft wird, ob das Ankoppelelement (22) mit dem Chassis des Anhängerfahrzeuges (10) Kontakt hat, das Ankoppelgegenstück (14) des Anhängerfahrzeuges (10) im Fangbereich (22-5) des Ankoppelelementes (22) des Zugfahrzeuges (20) positioniert ist oder eine Bestätigung seitens des Fahrers vorliegt, dass Anhängerfahrzeug (10) und Ankoppelelement (22) entsprechend ausgerichtet sind (S2).

4. Verfahren nach einem der vorhergehenden Ansprüche, **dadurch gekennzeichnet, dass** zum Starten der Rückwärtsfahrt ein bestimmtes Antriebsmoment der Antriebseinheit (24) des Zugfahrzeuges (20) eingestellt wird (S3) und die Geschwindigkeit des Zugfahrzeuges (20) bei der Rückwärtsfahrt so geregelt wird, dass eine vorgegebene Geschwindigkeit (V1) nicht überschritten wird.

5. Verfahren nach einem der vorhergehenden Ansprüche, **dadurch gekennzeichnet, dass** nach Erkennen des Auftretens der Querbeschleunigung (ay) in dem ersten Wertebereich (Th1, Th2) mit Auftreten der Längsbeschleunigung (ax) in dem zweiten Wertebereich (Th3, Th4) die Anzahl der Inkremente eines Inkrementgebers (IGR) während der Rückwärtsfahrt erfasst wird.

6. Verfahren nach Anspruch 5, **dadurch gekennzeichnet, dass** der Ankoppelvorgang abgebrochen wird, wenn die während der Rückwärtsfahrt erfasste Anzahl der Inkremente einen bestimmten Wert (Th7) überschreitet bis zu dem keine Längsbeschleunigung (ax) mit einem Wert in dem dritten Wertebereich gemessen wurde.

7. Verfahren nach einem der vorhergehenden Ansprüche, **dadurch gekennzeichnet, dass** nach Stoppen der Rückwärtsfahrt zum Verifizieren der erfolgreichen Ankoppelung die Betriebsbremse (26) gelöst wird und ein kurzes Anziehen des Anhängerfahrzeuges (10) mit dem Zugfahrzeug (20) durchgeführt wird (S12) durch Einlegen eines Vorwärtsgangs und Aufprägen eines bestimmten Antriebsmomentes (M2) für eine definierte Zeit, wobei während dieser Zeit die Anzahl der Inkremente des Inkrementgebers (IGR) erfasst wird (S13) oder der Abstand zwischen Zugfahrzeug (20) und Anhängerfahrzeug (10) gemessen wird.

8. Verfahren nach Anspruch 7, **dadurch gekennzeichnet, dass** der erfolgreiche Ankoppelvorgang bestätigt wird (S14), wenn die erfasste Anzahl der Inkremente des Inkrementgebers einen bestimmten Wert nicht überschreitet, oder der zum Ende des Anziehvorganges gemessene Abstand zwischen Zugfahrzeug (20) und Anhängerfahrzeug (10) den am Anfang des Anziehvorganges gemessenen Abstand um nicht mehr als einen Toleranzwert überschreitet.

9. Vorrichtung zum Steuern des assistierten oder automatischen Ankoppelns eines Anhängerfahrzeuges (10) an ein Zugfahrzeug (20), wobei das Zugfahrzeug (20) mit einer Antriebseinheit 24 und einem Ankoppelelement (22), das eine Seitenführung (22-2) für ein entsprechendes in das Ankoppelelement (22) einzuführendes Ankoppelgegenstück (14) des Anhängerfahrzeuges (10) aufweist, und einer elektronisch geregelten Betriebsbremse (26) ausgestattet ist, **dadurch gekennzeichnet, dass** die Vorrichtung eine elektronische Verarbeitungseinheit (PU2) aufweist, die über einen oder mehrere Kommunikationsbusse (B1) mit der elektronischen Steuereinheit (CU1) der Antriebseinheit (24) und der elektronisch geregelten Betriebsbremse (26) verbunden ist und eingerichtet ist mit der elektronischen Steuereinheit (CU1) der Antriebseinheit (24), und der elektronischen Steuereinheit (CU4) der Betriebsbremse (26) zu kommunizieren, um Messwerte bzgl. Längs- und Querbeschleunigung des Zugfahrzeuges (20) von einer Sensoreinheit (SU1) zu empfangen und Ansteuerbefehle an die elektronische Steuereinheit (CU4) der Betriebsbremse (26) und die elektronische Steuereinheit (CU1) der Antriebseinheit (24) zu übertragen derart, dass die Schritte des automatisierten Ankoppelvorgangs nach einem Verfahren nach einem der Ansprüche 1 bis 8 durchgeführt werden.

10. Vorrichtung nach Anspruch 9, wobei die Sensoreinheit (SU1) an die elektronisch geregelte Betriebsbremse (26) angeschlossen ist, die zur Messung der Längs- und Querbeschleunigung des Zugfahrzeuges (20) dient.

11. Vorrichtung nach Anspruch 9, wobei an die Verarbeitungseinheit (PU2) eine separate Sensoreinheit (SU1) angeschlossen ist, insbesondere in Form einer separaten IMU-Einheit, entsprechend Inertial Measurement Unit, die zur Messung der Längs- und Querbeschleunigung des Zugfahrzeuges (20) dient.

12. Vorrichtung nach einem der Ansprüche 9 bis 11, **dadurch gekennzeichnet, dass** die Sensoreinheit (SU1) wenigstens einen ersten Beschleunigungssensor umfasst, der die Längsbeschleunigung des Zugfahrzeuges (20) erfasst und einen zweiten Beschleunigungssensor umfasst, der die Querbeschleunigung des Zugfahrzeuges (20) erfasst.

13. Vorrichtung nach einem der Ansprüche 9 bis 11, **dadurch gekennzeichnet, dass** der elektronisch geregelten Betriebsbremse (26) ein oder mehrere Inkrementgebersensoren (IGS) zugeordnet sind, wobei ein Inkrementgebersensor (IGS) entweder einem Raddrehzahlsensor des Zugfahrzeuges (20) entspricht oder einem Drehzahlgebersensor eines Getriebes des Zugfahrzeuges (20).

14. Vorrichtung nach einem der Ansprüche 9 bis 13, **dadurch gekennzeichnet, dass** das Ankoppelelement (22) des Zugfahrzeuges (20) eine Sattelplatte (22-1) oder eine Maulkupplung umfasst.

15. Zugfahrzeug mit einer Antriebseinheit (24) und einer elektronisch geregelten Betriebsbremse (26), und einem Ankoppelelement (22), das eine Seitenführung (24) für ein entsprechendes in das Ankoppelelement (22) einzuführendes Ankoppelgegenstück (14) eines Anhängerfahrzeuges (10) aufweist, **dadurch gekennzeichnet, dass** das Zugfahrzeug (20) eine Vorrichtung nach einem der Ansprüche 9 bis 14 aufweist.

16. Elektronische Verarbeitungseinheit, die über einen oder mehrere Kommunikationsbusse (B1) mit der elektronischen Steuereinheit (CU1) der Antriebseinheit (24) und der elektronischen Steuereinheit (CU4) der Betriebsbremse (26) verbindbar ist und eingerichtet ist mit der Antriebseinheit (24), und der elektronischen Steuereinheit (CU4) der Betriebsbremse (26) zu kommunizieren, um Messwerte bzgl. Längs- und Querbeschleunigung des Zugfahrzeuges (20) von einer Sensoreinheit (SU1) zu empfangen und Ansteuerbefehle an die elektronische Steuereinheit (CU4) der Betriebsbremse (26) und die elektronische Steuereinheit (CU1) der Antriebseinheit (24) zu senden derart, dass die Schritte des automatisierten Ankoppelvorgangs nach einem Verfahren nach einem der Ansprüche 1 bis 8 durchführbar sind.

17. Computerprogramm, **dadurch gekennzeichnet, dass** das Computerprogramm Programmbefehle aufweist, die bei Abarbeitung in einer Prozessoreinheit eines Computers dazu führen, dass die Schritte des automatisierten Ankoppelvorgangs nach einem Verfahren nach einem der Ansprüche 1 bis 8 ausgeführt werden.

## Claims

1. Method for assisted or automatic coupling of a trailer vehicle (10) to a towing vehicle (20), the towing vehicle (20) being equipped with a coupling element (22), which has a side guide (22-2) for a corresponding coupling counterpart (14) of the trailer vehicle (10) to be inserted into the coupling element (22), an electronically regulated service brake (26) and a drive unit (24), an automated coupling process being started, after the towing vehicle (20) has been aligned with and brought closer to the trailer vehicle (10), which process comprises the steps of starting a reverse movement at a specific speed and at a specific drive torque (M1; S3), recording the longitudinal acceleration and the lateral acceleration (S4) of the towing vehicle (20), and which automated coupling process is **characterized by** the steps of, upon the occurrence of a lateral acceleration (ay) in a first value range (Th1, Th2) with the occurrence of a longitudinal acceleration (ax) in a second value range (Th3, Th4; S5) and the subsequent occurrence of a longitudinal acceleration (ax) in a third value range (S9), stopping the reverse movement (S10) by switching off the drive torque (M1) and/or by actuating the service brake (26).

2. Method according to claim 1, wherein the third value range is at least a specific value greater than the absolute value of the previously recorded lateral acceleration (ay).

3. Method according to claim 1 or claim 2, **characterized in that** before starting the reverse movement (S3), the level of the towing vehicle (20) is adjusted to the height of the trailer vehicle (10), and in one step (S2) it is checked whether the coupling element (22) is in contact with the chassis of the trailer vehicle (10), whether the coupling counterpart (14) of the trailer vehicle (10) is positioned in the catch region (22-5) of the coupling element (22) of the towing vehicle (20), or whether there is confirmation from the driver that the trailer vehicle (10) and the coupling element (22) are correspondingly aligned (S2).

4. Method according to any of the preceding claims, **characterized in that** to start the reverse movement, a specific drive torque of the drive unit (24) of the towing vehicle (20) is set (S3), and the speed of the towing vehicle (20) is regulated during the reverse movement such that a predetermined speed (V1) is not exceeded.

5. Method according to any of the preceding claims, **characterized in that** after identifying the occurrence of the lateral acceleration (ay) in the first value range (Th1, Th2) with the occurrence of the longitudinal acceleration (ax) in the second value range (Th3, Th4), the number of increments of an incremental counter (IGR) is recorded during the reverse movement.

6. Method according to claim 5, **characterized in that** the coupling process is aborted if the number of increments recorded during the reverse movement exceeds a specific value (Th7) up to which no longitudinal acceleration (ax) having a value in the third value range was measured.

7. Method according to any of the preceding claims, **characterized in that** after stopping the reverse movement, the service brake (26) is released to verify the successful coupling, and a short pull on the trailer vehicle (10) is carried out (S12) using the towing vehicle (20) by engaging a forward gear and applying a specific drive torque (M2) for a defined time, during which time the number of increments of the incremental counter (IGR) is recorded (S13) or the distance between the towing vehicle (20) and the trailer vehicle (10) is measured.

8. Method according to claim 7, **characterized in that** the successful coupling process is confirmed (S14) if the recorded number of increments of the incremental counter does not exceed a specific value, or if the distance between the towing vehicle (20) and the trailer vehicle (10) measured at the end of the pulling process does not exceed the distance measured at the beginning of the pulling process by more than a tolerance value.

9. Device for controlling the assisted or automatic coupling of a trailer vehicle (10) to a towing vehicle (20), the towing vehicle (20) being equipped with a drive unit (24) and a coupling element (22), which has a side guide (22-2) for a corresponding coupling counterpart (14) of the trailer vehicle (10) to be inserted into the coupling element (22), and an electronically regulated service brake **(26),characterized in that** the device has an electronic processing unit (PU2) which is connected to the electronic control unit (CU1) of the drive unit (24) and to the electronically regulated service brake (26) via one or more communication buses (B1), and which processing unit is set up to communicate with the electronic control unit (CU1) of the drive unit (24) and with the electronic control unit (CU4) of the service brake (26) in order to receive measured values regarding longitudinal acceleration and lateral acceleration of the towing vehicle (20) from a sensor unit (SU1) and to transmit control commands to the electronic control unit (CU4) of the service brake (26) and to the electronic control unit (CU1) of the drive unit (24) in such a way that the steps of the automated coupling process are carried out according to a method according to any of claims 1 to 8.

10. Device according to claim 9, wherein the sensor unit (SU1) is attached to the electronically regulated service brake (26), which sensor unit serves to measure the longitudinal acceleration and lateral acceleration of the towing vehicle (20).

11. Device according to claim 9, wherein a separate sensor unit (SU1) is attached to the processing unit (PU2), in particular a sensor unit in the form of a separate IMU unit, corresponding to an inertial measurement unit, which serves to measure the longitudinal acceleration and lateral acceleration of the towing vehicle (20).

12. Device according to any of claims 9 to 11, **characterized in that** the sensor unit (SU1) comprises at least a first acceleration sensor, which records the longitudinal acceleration of the towing vehicle (20), and a second acceleration sensor, which records the lateral acceleration of the towing vehicle (20).

13. Device according to any of claims 9 to 11, **characterized in that** one or more incremental counter sensors (IGS) are assigned to the electronically regulated service brake (26), an incremental counter sensor (IGS) corresponding to either a wheel speed sensor of the towing vehicle (20) or to a speed sensor of a transmission of the towing vehicle (20).

14. Device according to any of claims 9 to 13, **characterized in that** the coupling element (22) of the towing vehicle (20) comprises a fifth wheel plate (22-1) or a jaw coupling.

15. Towing vehicle comprising a drive unit (24) and an electronically regulated service brake (26), and a coupling element (22) which has a side guide (24) for a corresponding coupling counterpart (14) of a trailer vehicle (10) to be inserted into the coupling element **(22),characterized in that** the towing vehicle (20) has a device according to any of claims 9 to 14.

16. Electronic processing unit which can be connected to the electronic control unit (CU1) of the drive unit (24) and to the electronic control unit (CU4) of the service brake (26) via one or more communication buses (B1), and which processing unit is set up to communicate with the drive unit (24) and with the electronic control unit (CU4) of the service brake (26) in order to receive measured values regarding longitudinal acceleration and lateral acceleration of the towing vehicle (20) from a sensor unit (SU1) and to send control commands to the electronic control unit (CU4) of the service brake (26) and to the electronic control unit (CU1) of the drive unit (24) in such a way that the steps of the automated coupling process can be carried out according to a method according to any of claims 1 to 8.

17. Computer program, **characterized in that** the computer program comprises program commands which, when executed in a processor unit of a computer, lead to the steps of the automated coupling process being carried out according to a method according to any of claims 1 to 8.

## Revendications

1. Procédé permettant l'attelage assisté ou automatique d'un véhicule remorqué (10) à un véhicule tracteur (20), dans lequel le véhicule tracteur (20) est équipé d'un élément d'attelage (22), lequel présente un guidage latéral (22-2) pour une contre-pièce d'attelage (14) correspondante du véhicule remorqué (10) à insérer dans l'élément d'attelage (22), d'un frein de service (26) à régulation électronique et d'une unité d'entraînement (24), dans lequel un processus d'attelage automatisé démarre après une orientation et un rapprochement du véhicule tracteur (20) par rapport au véhicule remorqué (10), lequel processus d'attelage comprend les étapes de démarrage d'une marche arrière à une vitesse déterminée et avec un couple d'entraînement (M1 ; S3) déterminé, de détection de l'accélération longitudinale et transversale (S4) du véhicule tracteur (20) et est **caractérisé par** les étapes consistant à, lors de l'apparition d'une accélération transversale (ay) dans une première plage de valeurs (Th1, Th2) avec apparition d'une accélération longitudinale (ax) dans une deuxième plage de valeurs (Th3, Th4 ; S5) puis apparition ultérieure d'une accélération longitudinale (ax) dans une troisième plage de valeurs (S9), arrêter la marche arrière (S10) par une coupure du couple d'entraînement (M1) et/ou actionner le frein de service (26).

2. Procédé selon la revendication 1, dans lequel la troisième plage de valeurs est supérieure d'au moins une valeur déterminée à la valeur absolue de l'accélération transversale (ay) précédemment détectée.

3. Procédé selon la revendication 1 ou 2, **caractérisé en ce que,** avant le démarrage de la marche arrière (S3), le niveau du véhicule tracteur (20) est adapté à la hauteur du véhicule remorqué (10) et, dans une étape (S2), on vérifie si l'élément d'attelage (22) est en contact avec le châssis du véhicule remorqué (10), si la contre-pièce d'attelage (14) du véhicule remorqué (10) est positionnée dans la zone de préhension (22-5) de l'élément d'attelage (22) du véhicule tracteur (20) ou s'il existe une confirmation de la part du conducteur que le véhicule remorqué (10) et l'élément d'attelage (22) sont alignés de manière correspondante (S2).

4. Procédé selon l'une des revendications précédentes,
**caractérisé en ce que,** pour le démarrage de la marche arrière, un couple d'entraînement déterminé de l'unité d'entraînement (24) du véhicule tracteur (20) est réglé (S3) et la vitesse du véhicule tracteur (20) est régulée lors de la marche arrière de sorte qu'une vitesse prédéfinie (V1) ne soit pas dépassée.

5. Procédé selon l'une des revendications précédentes, **caractérisé en ce que,** après la détection de l'apparition de l'accélération transversale (ay) dans la première plage de valeurs (Th1, Th2) avec apparition de l'accélération longitudinale (ax) dans la deuxième plage de valeurs (Th3, Th4), le nombre d'incréments d'un générateur d'incréments (IGR) est détecté pendant la marche arrière.

6. Procédé selon la revendication 5, **caractérisé en ce que** le processus d'attelage est interrompu lorsque le nombre d'incréments détecté pendant la marche arrière dépasse une valeur déterminée (Th7) jusqu'à laquelle aucune accélération longitudinale (ax) n'a été mesurée avec une valeur dans la troisième plage de valeurs.

7. Procédé selon l'une des revendications précédentes,
**caractérisé en ce que,** après l'arrêt de la marche arrière permettant de vérifier la réussite de l'attelage, le frein de service (26) est desserré et une brève attraction du véhicule remorqué (10) est effectuée (S12) avec le véhicule tracteur (20) en engageant une vitesse avant et en appliquant un couple d'entraînement (M2) déterminé pendant un temps défini, dans lequel, pendant ce temps, le nombre d'incréments du générateur d'incréments (IGR) est détecté (S13) ou la distance entre le véhicule tracteur (20) et le véhicule remorqué (10) est mesurée.

8. Procédé selon la revendication 7, **caractérisé en ce que** la réussite du processus d'attelage est confirmée (S14) si le nombre d'incréments détecté du générateur d'incréments ne dépasse pas une valeur déterminée, ou si la distance entre le véhicule tracteur (20) et le véhicule remorqué (10), laquelle est mesurée à la fin du processus d'attelage, ne dépasse pas de plus d'une valeur de tolérance la distance mesurée au début du processus d'attelage.

9. Dispositif permettant la commande de l'attelage assisté ou automatique d'un véhicule remorqué (10) à un véhicule tracteur (20), dans lequel le véhicule tracteur (20) est équipé d'une unité d'entraînement (24) et d'un élément d'attelage (22), lequel présente un guidage latéral (22-2) pour une contre-pièce d'attelage (14) correspondante du véhicule remorqué (10) à insérer dans l'élément d'attelage (22), et d'un frein de service (26) à régulation électronique,
**caractérisé en ce que** le dispositif présente une unité de traitement électronique (PU2) qui est connectée par un ou plusieurs bus de communication (B1) à l'unité de commande électronique (CU1) de l'unité d'entraînement (24) et au frein de service (26) à régulation électronique et qui est configurée pour communiquer avec l'unité de commande électronique (CU1)de l'unité d'entraînement (24) et l'unité de commande électronique (CU4) du frein de service (26) afin de recevoir des valeurs de mesure concernant une accélération longitudinale et transversale du véhicule tracteur (20) par une unité formant capteur (SU1) et de transmettre des instructions de commande à l'unité de commande électronique (CU4) du frein de service (26) et à l'unité de commande électronique (CU1) de l'unité d'entraînement (24) de telle sorte que les étapes du processus d'attelage automatisé sont mises en œuvre selon un procédé selon l'une des revendications 1 à 8.

10. Dispositif selon la revendication 9, dans lequel l'unité formant capteur (SU1) est connectée au frein de service (26) à régulation électronique qui sert à mesurer l'accélération longitudinale et transversale du véhicule tracteur (20).

11. Dispositif selon la revendication 9, dans lequel une unité formant capteur (SU1) séparée est connectée à l'unité de traitement (PU2), en particulier sous la forme d'une unité IMU séparée, correspondant à Unité de Mesure Inertielle (Inertial Measurement Unit), qui sert à mesurer l'accélération longitudinale et transversale du véhicule tracteur (20).

12. Dispositif selon l'une des revendications 9 à 11, **caractérisé en ce que** l'unité formant capteur (SU1) comprend au moins un premier capteur d'accélération qui détecte l'accélération longitudinale du véhicule tracteur (20) et comprend un second capteur d'accélération qui détecte l'accélération transversale du véhicule tracteur (20).

13. Dispositif selon l'une des revendications 9 à 11, **caractérisé en ce qu'un** ou plusieurs capteurs formant générateurs d'incréments (IGS) sont associés au frein de service (26) à régulation électronique, dans lequel un capteur formant générateur d'incréments (IGS) correspond soit à un capteur de vitesse de rotation des roues du véhicule tracteur (20), soit à un capteur formant générateur de vitesse de rotation d'une transmission du véhicule tracteur (20).

14. Dispositif selon l'une des revendications 9 à 13, **caractérisé en ce que** l'élément d'attelage (22) du véhicule tracteur (20) comprend une sellette d'attelage (22-1) ou un attelage à mâchoire.

15. Véhicule tracteur comportant une unité d'entraînement (24) et un frein de service (26) à régulation électronique, et un élément d'attelage (22) qui présente un guidage latéral (24) pour une contre-pièce d'attelage (14) correspondante d'un véhicule remorqué (10) à insérer dans l'élément d'attelage (22), **caractérisé en ce que** le véhicule tracteur (20) présente un dispositif selon l'une des revendications 9 à 14.

16. Unité de traitement électronique qui peut être connectée par un ou plusieurs bus de communication (B1) à l'unité de commande électronique (CU1) de l'unité d'entraînement (24) et à l'unité de commande électronique (CU4) du frein de service (26) et qui est configurée pour communiquer avec l'unité d'entraînement (24) et l'unité de commande électronique (CU4) du frein de service (26) afin de recevoir des valeurs de mesure concernant une accélération longitudinale et transversale du véhicule tracteur (20) par une unité formant capteur (SU1) et d'envoyer des instructions de commande à l'unité de commande électronique (CU4) du frein de service (26) et à l'unité de commande électronique (CU1) de l'unité d'entraînement (24) de telle sorte que les étapes du processus d'attelage automatisé peuvent être mises en œuvre selon un procédé selon l'une des revendications 1 à 8.

17. Programme informatique, **caractérisé en ce que** le programme informatique présente des instructions de programme qui, en cas d'exécution dans une unité de traitement d'un ordinateur, entraînent la mise en œuvre des étapes du processus d'attelage automatisé selon un procédé selon l'une des revendications 1 à 8.
